# EUROPEAN PATENT APPLICATION

(11) **EP 4 557 713 A1**
(43) Date of publication of application: **21.05.2025**
(21) Application number: 23855132.9
(22) Date of filing: 14.08.2023
(51) Int. Cl.: H04M 1/72415, G04G 21/04, G06F 3/041, G06F 3/0484, G06F 3/0481, H04M 1/72403, H04M 1/72469, H04M 1/02

(54) **ELECTRONIC DEVICE FOR DETERMINING SETTING INFORMATION OF EXTERNAL ELECTRONIC DEVICE, AND METHOD OF OPERATING ELECTRONIC DEVICE**

(30) Priority: 17.08.2022 KR 20220102552; 22.09.2022 KR 20220119858
(71) Applicant: Samsung Electronics Co., Ltd., Suwon-si, Gyeonggi-do 16677 (KR)
(72) Inventor: LEE, Nina, Suwon-si, Gyeonggi-do 16677 (KR); KIM, Eunsun, Suwon-si, Gyeonggi-do 16677 (KR); KIM, Pilwon, Suwon-si, Gyeonggi-do 16677 (KR); SEO, Hoyoung, Suwon-si, Gyeonggi-do 16677 (KR); OK, Joonho, Suwon-si, Gyeonggi-do 16677 (KR); JUNG, Jinyung, Suwon-si, Gyeonggi-do 16677 (KR); OH, Younghak, Suwon-si, Gyeonggi-do 16677 (KR)
(74) Representative: HGF
(86) International application number: PCT/KR2023/012054
(87) International publication number: WO 2024/039165

(57) **Abstract**

An electronic device according to one embodiment of the present disclosure comprises a communication unit, a sensor unit, a camera unit including a front camera and a rear camera, a processor, and a memory operatively connected to the processor. The memory can store instructions that, when executed, cause the electronic device to: connect the electronic device to an external electronic device; while operating a first application including a photo and video capture function related to the camera unit, detect movement of the electronic device by using the sensor unit; in response to the electronic device not moving for more than a specified period of time, obtain a direction of the external electronic device by using the communication unit; determine setting information of a second application on the basis of the direction of the external electronic device; and transmit the determined setting information of the second application to the external electronic device.

## Description

### [Technical Field]

The disclosure relates to an electronic device for determining configuration information of an external electronic device, and a method for operating an electronic device.

### [Background Art]

An electronic device which can perform various functions and which can be worn on the body of a user is being developed. This is called a wearable device, and among wearable devices, an electronic device which has a shape similar to a watch and which can be worn on the wrist of the user is called a smart watch.

The smart watch may perform various functions, and may be connected to a smartphone and control some functions of the smartphone. For example, when a photo is captured using a camera by the smartphone, the smart watch connected to the smartphone may control a camera application of the smartphone by using a camera control application.

Among wearable devices, a wireless earphone for inputting and outputting sound may be connected to a smartphone and may transmit a voice signal obtained by the wireless earphone to the smartphone. The smartphone may control the smartphone according to the voice signal received from the wireless earphone, or record a voice signal.

### [Disclosure of Invention]

### [Technical Problem]

An external electronic device (e.g., a wearable device) paired with an electronic device may control the electronic device according to transmission or reception of a signal therebetween.

An embodiment of the disclosure provides an electronic device for determining, based on a movement state of an electronic device, the direction in which the electronic device and an external electronic device are positioned, and the distance therebetween, configuration information of the external electronic device.

For example, when executing a camera application, an electronic device may determine configuration information for controlling the camera application by displaying a preview of the camera application by an external electronic device when the external electronic device is positioned on a rear surface of the electronic device and not displaying the preview but displaying an image capture button in a large size when the external electronic device is positioned near a front surface of the electronic device. For example, when executing a camera application, an electronic device may determine configuration information for controlling the camera application by activating a zoom button and activating a microphone of an external electronic device when the external electronic device is positioned far from the electronic device.

The technical subjects pursued in the disclosure may not be limited to the above mentioned technical subjects, and other technical subjects which are not mentioned may be clearly understood from the following descriptions by those skilled in the art to which the disclosure pertains.

### [Solution to Problem]

An electronic device according to an embodiment of the disclosure may include a communication unit, a sensor unit, a camera unit including a front camera and a rear camera, a processor, and a memory operatively connected to the processor. The memory may store instructions which, when executed, cause the electronic device to connect an external electronic device and the electronic device, while operating a first application including a photo capture function and a video shoot function related to the camera unit, detect movement of the electronic device by using the sensor unit, in response to the electronic device not moving for a specified time interval or longer, and obtain a direction of the external electronic device by using the communication unit. The memory may store instructions which, when executed, cause the electronic device to determine, based on the direction of the external electronic device, configuration information of a second application corresponding to an auxiliary application of the first application, which operates in the external electronic device, and transmit the determined configuration information of the second application to the external electronic device.

A system according to an embodiment may include an electronic device and an external electronic device. The electronic device may be configured to connect to the external electronic device and detect movement of the electronic device while operating a first application including a photo capture function and a video shoot function. The electronic device may be configured to transmit a request signal to the external electronic device by using a communication unit in response to the electronic device not moving for a specified time interval or longer. The external electronic device may be configured to transmit a response signal to the request signal to the electronic device, and the electronic device may be configured to obtain, based on the response signal, a direction of the external electronic device. The electronic device may be configured to determine, based on the direction of the external electronic device, configuration information of a second application corresponding to an auxiliary application of the first application, which operates in the external electronic device. The electronic device may be configured to transmit the determined configuration information of the second application to the external electronic device. The external electronic device may be configured to configure, based on the configuration information of the second application, the second application.

A method for operating an electronic device according to an embodiment may include connecting an external electronic device and the electronic device, while operating a first application including a photo capture function and a video shoot function, detecting movement of the electronic device by using a sensor unit, in response to the electronic device not moving for a specified time interval or longer, obtaining a direction of the external electronic device by using a communication unit, determining, based on the direction of the external electronic device, configuration information of a second application corresponding to an auxiliary application of the first application, which operates in the external electronic device, and transmitting the determined configuration information of the second application to the external electronic device.

### [Advantageous Effects of Invention]

For example, an electronic device can provide a control environment that is convenient for a user in configuring an external electronic device for controlling a camera application according to an execution environment of a camera application.

For example, an electronic device can provide a shooting environment which can increase the sound quality of a voice recorded when shooting a video, by differing a voice recording scheme according to an execution environment of a camera application.

### [Brief Description of Drawings]

With regard to the description of the drawings, the same or like reference signs may be used to designate the same or like elements.
FIG. 1 is a block diagram illustrating an electronic device in a network environment according to embodiments.
FIG. 2A is a block diagram of an electronic device according to an embodiment.
FIG. 2B illustrates a system according to an embodiment.
FIG. 3A is a flow chart illustrating a method for determining, by an electronic device 200, configuration information of a second application for controlling a first application according to an embodiment.
FIG. 3B is a flow chart illustrating a method for determining configuration information of a second application for controlling a first application and configuration the second application in a system according to an embodiment.
FIG. 4A (FIGS. 4AA and 4AB) is a flow chart illustrating a method for determining configuration of a second application of the first external electronic device while executing a first image-capture function in a first application by the electronic device according to an embodiment.
FIG. 4B illustrates a display screen of a first external electronic device based on configuration information of a second application according to an embodiment.
FIG. 5A (FIGS. 5AA and 5AB) is a flow chart illustrating a method for determining configuration information of a second application of the first external electronic device while executing a second image capture function in a first application by the electronic device according to an embodiment.
FIG. 5B illustrates a display screen of a first external electronic device based on configuration information of a second application according to an embodiment.
FIG. 6 is a flow chart illustrating a method for determining configuration information of a second external electronic device while executing a first image capture function in a first application by an electronic device according to an embodiment.
FIG. 7 is a flow chart illustrating a method for determining configuration information of a second external electronic device when executing a second image capture function in a first application by an electronic device according to an embodiment.
FIG. 8 (FIGS. 8A and 8B) is a flow chart illustrating a method for determining configuration information of a second application of a first external electronic device and configuration information of a second external electronic device when operating as a second image capture function in a first application by an electronic device according to an embodiment.

### [Mode for the Invention]

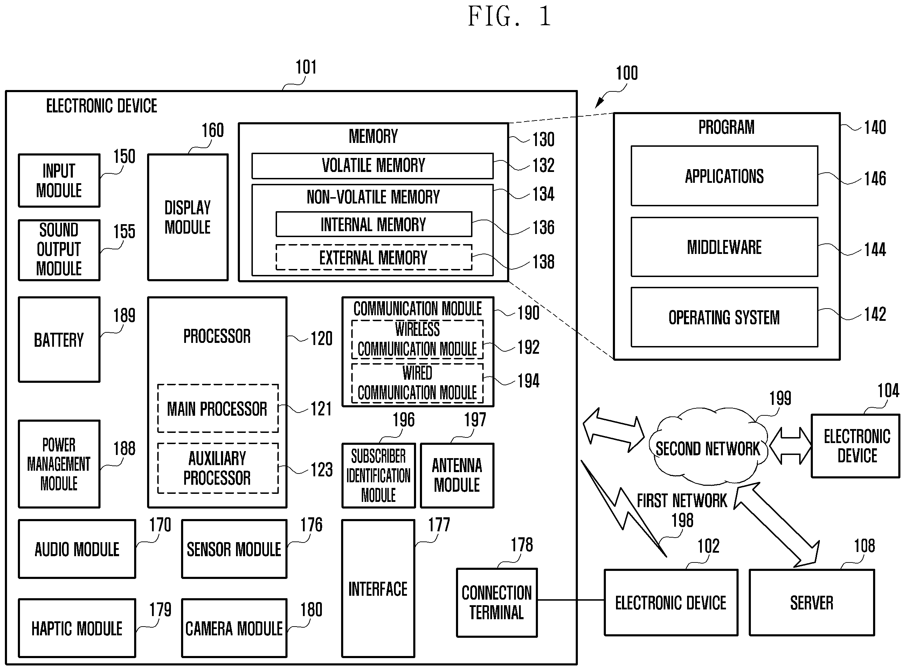

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

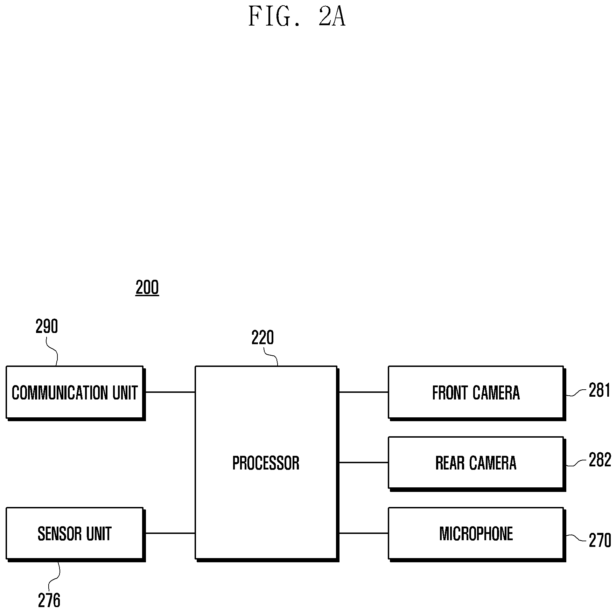

FIG. 2A is a block diagram of an electronic device according to an embodiment.

Referring to FIG. 2A, an electronic device 200 (e.g., the electronic device 101) may include a processor 220 (e.g., the processor 120 of FIG. 1), a sensor unit 276 (e.g., the sensor module 176 of FIG. 1), a communication unit 290 (e.g., the communication module 190 of FIG. 1), a front camera 281 (e.g., the camera 180 of FIG. 1), a rear camera 282 (e.g., the camera 180 of FIG. 1), and/or a microphone 270 (e.g., the audio module 170 of FIG. 1). Elements included in FIG. 2A are some of the elements included in the electronic device 200, and the electronic device 200 may also include various embodiments as illustrated in FIG. 1.

The sensor unit 276 according to an embodiment may detect a signal related to a movement of the electronic device.

According to an embodiment, the sensor unit 276 may include an acceleration sensor and/or a gyro sensor. For example, the acceleration sensor may measure a signal related to the acceleration of the electronic device 200. For example, the acceleration sensor may measure a rotation angle of a roll, pitch, or yaw axis with reference to a reference axis. For example, the gyro sensor may measure a signal related to the angular speed of the electronic device 200. For example, the gyro sensor may measure a variance of a rotation angle per time unit at the roll, pitch, or yaw axis with reference to the reference axis.

The processor 220 according to an embodiment may detect, based on a signal (e.g., a signal related to the acceleration and/or the angular speed) related to the movement of the electronic device, detected by the sensor unit 276, a movement of the electronic device 200.

The communication unit 290 according to an embodiment may communicate with an external electronic device and/or a server through a first network (e.g., the first network 198 of FIG. 1) (e.g., a short-distance communication network such as Bluetooth, wireless fidelity (Wi-Fi) direct or infrared data association (IrDA), BLE, and UWB) or a second network (e.g., the first network 199 of FIG. 1) (e.g., a long-distance communication network such as a legacy cellular network, a 5G network, a next-generation communication network, Internet, or a computer network (e.g., LAN or WAN)).

The communication unit 290 according to an embodiment may transmit a control command generated by the processor 220 to the external electronic device and/or the server.

The communication unit 290 according to an embodiment may include a UWB module for performing communication by an ultra-wideband (UWB) wireless communication scheme. In the disclosure, it is described under the assumption that the electronic device 200 supports the UWB communication scheme, but the communication unit 290 may be substituted by a communication module (e.g., a Bluetooth low energy (BLE) module) supporting various communication schemes which enable the distance with the external electronic device to be measured. According to an embodiment, the UWB module may include at least one UWB antenna.

According to an embodiment, the processor 220 may measure the distance from the external electronic device through the UWB module. For example, the processor 220 may measure, based on a time of flight (ToF), the distance between the UWB module and the external electronic device.

For example, the processor 220 may measure the distance between the UWB module and the external electronic device by a time difference of arrival (TDoA) scheme. Specifically, the processor 220 may specify the UWB module as a UWB tag, specify the external electronic device as a UWB anchor, and measure, based on a difference between a time when the UWB module transmits a data packet and a time when the external electronic device 500 receives data, the distance between the UWB module and the external electronic device. For example, the processor 220 may determine a ToF based on a time difference between a time stamp when the UWB module transmits a data packet and a time stamp when the external electronic device receives the data packet.

For example, the processor 220 may measure the distance between the UWB module and the externa electronic device by a two-way ranging (TWR) scheme. According to an embodiment, the processor 220 may measure a distance and direction information measurement operation by using the two-way ranging (TWR) scheme between external electronic devices capable of UWB communication in which no clock is synchronized. The TWR operation may be divided into single sided two way ranging (SS-TWR) and double sided two way ranging (DS-TWR). The processor 220 may perform the distance and direction information measurement operation through the SS-TWR and the DS-TWR. Specifically, the processor 220 may specify the UWB module as a UWB tag, specify the external electronic device as a UWB anchor, and measure, based on a time interval in which the UWB model transmits a data packet and receives a response from the external electronic device, the distance between the UWB module and the external electronic device. For example, the processor 220 may determine a ToF, based on a time interval (T_Poll) from a time point at which the UWB module transmits a data packet and a time point at which the UWB module receives a response, and a time interval (T_reply) from a time point at which the external electronic device receives a data packet and a time point at which the external electronic device transmits a response.

According to an embodiment, the processor 220 may measure, based on a communication signal of the UWB module and the external electronic device, a relative angle between the UWB module and the external electronic device to identify the direction in which the external electronic device is positioned. According to an embodiment, the UWB module may include two or more UWB antennas.

For example, the processor 220 may measure the relative angle (e.g., an arrival of angle (AOA)) between the UWB module and the external electronic device. Specifically, the processor 220 may obtain the signal transmitted from the external electronic device via a first antenna and a second antenna of the UWB module. For example, the processor 220 may obtain the signal arrival time and phase of each of the first antenna and the second antenna of the UWB module. The processor 220 may determine, based on a difference in the arrival time and phase of signals obtained by the first antenna and the second antenna of the UWB module, respectively, the relative angle between the UWB module and the external electronic device.

The front camera 281 according to an embodiment may be a camera which is disposed on a front surface of the electronic device 200 and captures an image of a front view of the electronic device 200.

The rear camera 282 according to an embodiment may be a camera which is disposed on a rear surface of the electronic device 200 and captures an image of a rear view of the electronic device 200.

The rear camera 282 according to an embodiment may include an ultrawide camera, a wide camera, and a tele camera. The ultrawide camera is a camera which includes an ultrawide lens and is used to capture an image of a near subject. The wide camera may be a camera which includes a wide lens and is used to capture a near subject. The tele camera may be a camera which includes a tele lens and is used to capture an image of a far subject.

The processor 220 according to an embodiment may operate a first application (e.g., an application using a camera) by using the rear camera 281 and/or the rear camera 282.

The microphone 270 according to an embodiment may obtain a voice input from the outside (e.g., a user).

The processor 220 according to an embodiment may perform, based on the voice input obtained by the microphone 270, a specified operation and/or record a voice to be included in a video.

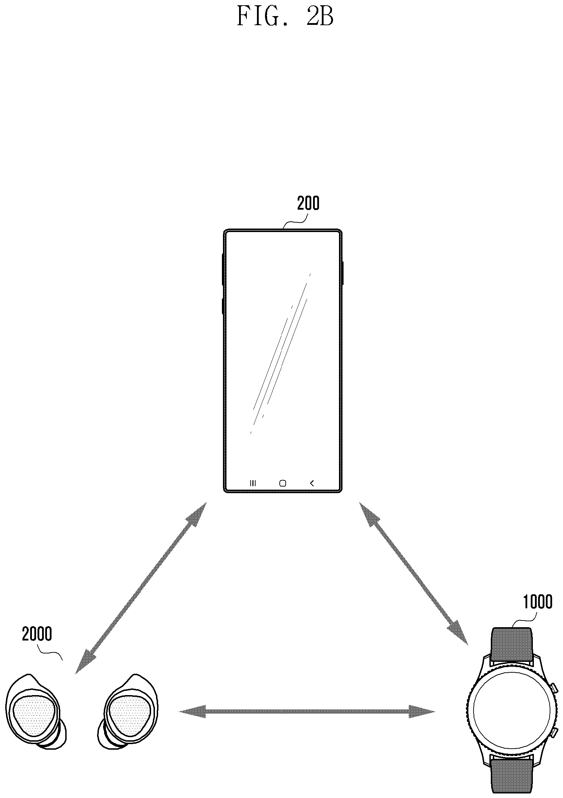

FIG. 2B illustrates a system according to an embodiment.

The system according to an embodiment may include an electronic device 200, a first external electronic device 1000, and/or a second external electronic device 2000.

The electronic device 200 according to an embodiment may be the electronic device 200 of FIG. 2A.

The electronic device 200 according to an embodiment may transmit or receive various information to or from the first electronic device 1000 and/or the second external electronic device 2000 through a communication unit 290 (e.g., the communication unit 290 of FIG. 2A).

For example, the electronic device 200 may transmit a control command generated by the processor 220 to the first external electronic device 1000 and/or the second external electronic device 2000 through the communication unit 290.

For example, the electronic device 200 may measure, based on a signal (e.g., a UWB and/or BLE signal) transmitted or received by the first external electronic device 1000 and/or the second external electronic device 2000 through the communication unit 290, the distance between the first external electronic device 1000 and/or the second external electronic device 2000 and/or the direction in which the first external electronic device 1000 and/or the second external electronic device 2000 is positioned.

The first external electronic device 1000 according to an embodiment may include at least one of a communication unit, a display, and a microphone.

The first external electronic device 1000 according to an embodiment may transmit or receive various information to or from the electronic device 200 through a communication unit.

The first external electronic device 1000 according to an embodiment may output, based on information (e.g., configuration information a second application) received from the electronic device 200, a specified screen to the display.

The first external electronic device 1000 according to an embodiment may collect a voice signal by using the microphone. The first external electronic device 1000 may perform, based on the collected voice signal, a specified operation and/or transmit the collected voice signal to the electronic device 200.

The second external electronic device 2000 according to an embodiment may include at least one of a communication unit, a speaker, and a microphone.

The second external electronic device 2000 according to an embodiment may transmit or receive various information to or from the electronic device 200 through the communication unit.

The second external electronic device 2000 according to an embodiment may output, based on information received from the electronic device 200 (e.g., configuration information of the second external electronic device), a specified voice signal through the speaker.

The second external electronic device 2000 according to an embodiment may collect the voice signal by using the microphone. The second external electronic device 2000 may perform, based on the collected voice signal, a specified operation and/or transmit the collected voice signal to the electronic device 200.

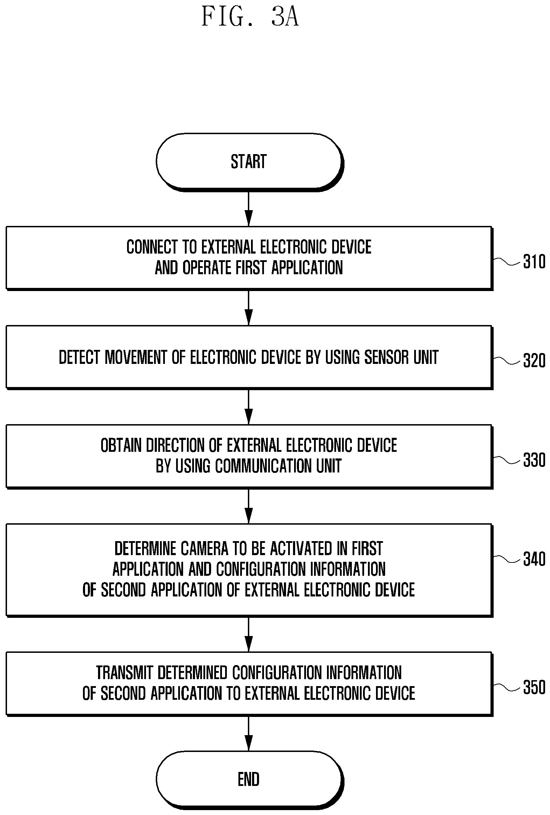

FIG. 3A is a flow chart illustrating a method for determining, by an electronic device 200, configuration information of a second application for controlling a first application according to an embodiment.

According to an embodiment, the second application may be an auxiliary application of the first application, the auxiliary application operating in an external device. For example, the second application may be an application for remotely controlling the first application in the external electronic device 1000.

**In** operation 310, the processor 220 according to an embodiment may identify connection with the external electronic device 1000 (e.g., the first external electronic device 1000 and/or the second external electronic device 2000), and operate a first application.

According to an embodiment, the electronic device 200 and the external electronic device 1000 may be connected to each other through the communication unit 290. For example, the communication unit 290 of the electronic device 200 may be paired with the external electronic device 1000 by using the first network (e.g., the first network 198 of FIG. 1 (e.g., a short-distance communication network such as Bluetooth, wireless fidelity (Wi-Fi) direct or infrared data association (IrDA), BLE, and UWB) and transmit or receive various information to or from the external electronic device 1000.

According to an embodiment, the first application may be an application related to a camera. For example, the first application may be an application for capturing a photo and/or shooting a video by using the front camera 281 and/or the rear camera 282.

According to an embodiment, the first application may execute a photo capture function and/or a video shoot function.

In operation 320, the processor 220 according to an embodiment may detect movement of the electronic device 200 by using the sensor unit 276.

According to an embodiment, the sensor unit 276 may detect a signal (e.g., a signal related to acceleration and/or angular speed) related to movement of the electronic device 200. The processor 220 may identify, based on the signal detected by the sensor unit 276, movement of the electronic device 200.

In operation 330, the processor 220 according to an embodiment may obtain and/or calculate the direction and/or position of the external electronic device 1000 by using the communication unit 290.

According to an embodiment, the communication unit 290 may transmit or receive a signal to or from the external electronic device 1000. The processor 220 may obtain and/or calculate, based on the signal (e.g., a UWB and/or BLE signal) transmitted or received to or from the external electronic device 1000 by the communication unit 290, the distance from the external electronic device 1000 and/or the direction in which the external electronic device 1000 is positioned.

In operation 340, the processor 220 according to an embodiment may determine a camera to be activated in the first application and determine configuration information of the second application of the external electronic device 1000.

According to an embodiment, the configuration information of the second application may include whether to activate a preview, whether to activate zooming, the size of a shutter button, whether to activate a microphone, whether to activate a microphone configuration icon, and/or whether to activate voice recognition.

According to an embodiment, the processor 220 may determine, based on the position of the external electronic device 1000, configuration information of the second application. For example, the processor 220 may determine, based on whether the external electronic device 1000 is positioned on the front surface or the rear surface of the electronic device 200, the configuration information of the second application. For example, the processor 220 may determine, based on whether the external electronic device 1000 is positioned within a specified distance, the configuration information of the second application.

In operation 350, the processor 220 according to an embodiment may transmit the determined configuration information of the second application to the external electronic device 1000.

According to an embodiment, the processor 220 may transmit the configuration information of the second application to the external electronic device 1000 by using the communication unit 290.

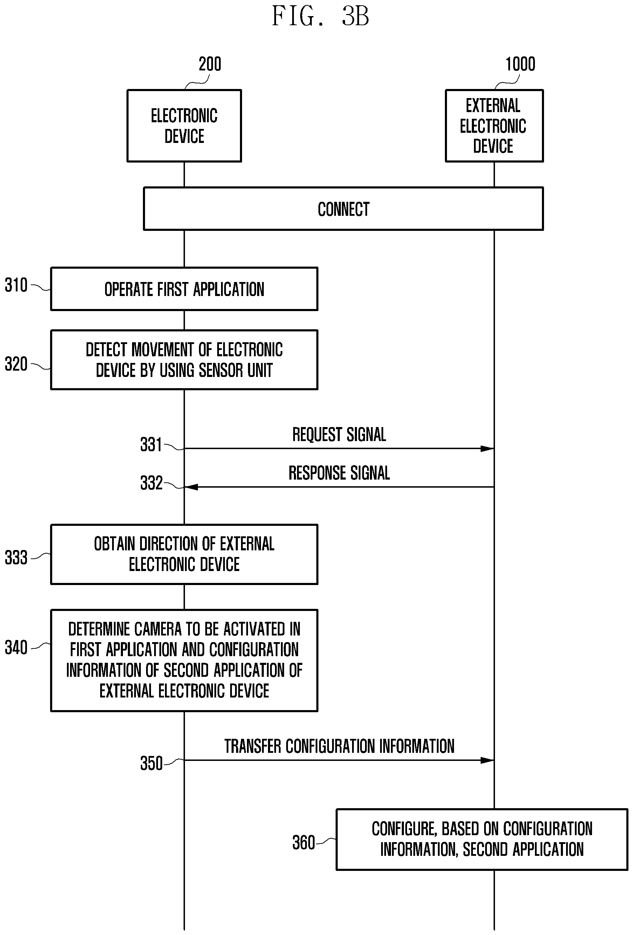

FIG. 3B is a flow chart illustrating a method for determining configuration information of a second application for controlling a first application and configuration the second application in a system according to an embodiment.

According to an embodiment, the second application may be an auxiliary app of the first application, the auxiliary app operating in an external device. For example, the second application may be an application for remotely controlling the first application in the external electronic device 1000.

In operation 310, the processor 220 according to an embodiment may identify connection with the external electronic device 1000, and operate a first application.

According to an embodiment, the electronic device 200 and the external electronic device 1000 may be connected to each other through the communication unit 290. For example, the communication unit 290 of the electronic device 200 may be paired with the external electronic device 1000 by using the first network (e.g., the first network 198 of FIG. 1 (e.g., a short-distance communication network such as Bluetooth, wireless fidelity (Wi-Fi) direct or infrared data association (IrDA), BLE, and UWB) and transmit or receive various information to or from the external electronic device 1000.

According to an embodiment, the first application may be an application related to a camera. For example, the first application may be an application for capturing a photo and/or shooting a video by using the front camera 281 and/or the rear camera 282.

According to an embodiment, the first application may execute a photo capture function and/or a video shoot function.

In operation 320, the processor 220 according to an embodiment may detect movement of the electronic device 200 by using the sensor unit 276.

According to an embodiment, the sensor unit 276 may detect a signal (e.g., a signal related to acceleration and/or angular speed) related to movement of the electronic device 200. The processor 220 may identify, based on the signal detected by the sensor unit 276, movement of the electronic device 200.

The processor 220 according to an embodiment may obtain and/or calculate the direction and/or position of the external electronic device 1000 by using the communication unit 290.

According to an embodiment, the communication unit 290 may transmit a request signal to the external electronic device 1000 in operation 331.

According to an embodiment, the external electronic device 1000 may transmit a response signal to the electronic device 200 in operation 332.

According to an embodiment, in operation 333, the processor 220 may obtain and/or calculate, based on the signal (e.g., a UWB and/or BLE signal) transmitted or received to or from the external electronic device 1000 by the communication unit 290, the distance from the external electronic device 1000 and/or the direction in which the external electronic device 1000 is positioned.

In operation 340, the processor 220 according to an embodiment may determine a camera to be activated in the first application and determine configuration information of the second application of the external electronic device 1000.

According to an embodiment, the configuration information of the second application may include whether to activate a preview, whether to activate zooming, the size of a shutter button, whether to activate a microphone, whether to activate a microphone configuration icon, and/or whether to activate voice recognition.

According to an embodiment, the processor 220 may determine, based on the position of the external electronic device 1000, configuration information of the second application. For example, the processor 220 may determine, based on whether the external electronic device 1000 is positioned on the front surface or the rear surface of the electronic device 200, the configuration information of the second application. For example, the processor 220 may determine, based on whether the external electronic device 1000 is positioned within a specified distance, the configuration information of the second application.

In operation 350, the processor 220 according to an embodiment may transmit the determined configuration information of the second application to the external electronic device 1000.

According to an embodiment, the processor 220 may transmit the configuration information of the second application to the external electronic device 1000 by using the communication unit 290.

The external electronic device 1000 according to an embodiment may configure, based on the determined configuration information of the second application, the second application in operation 360.

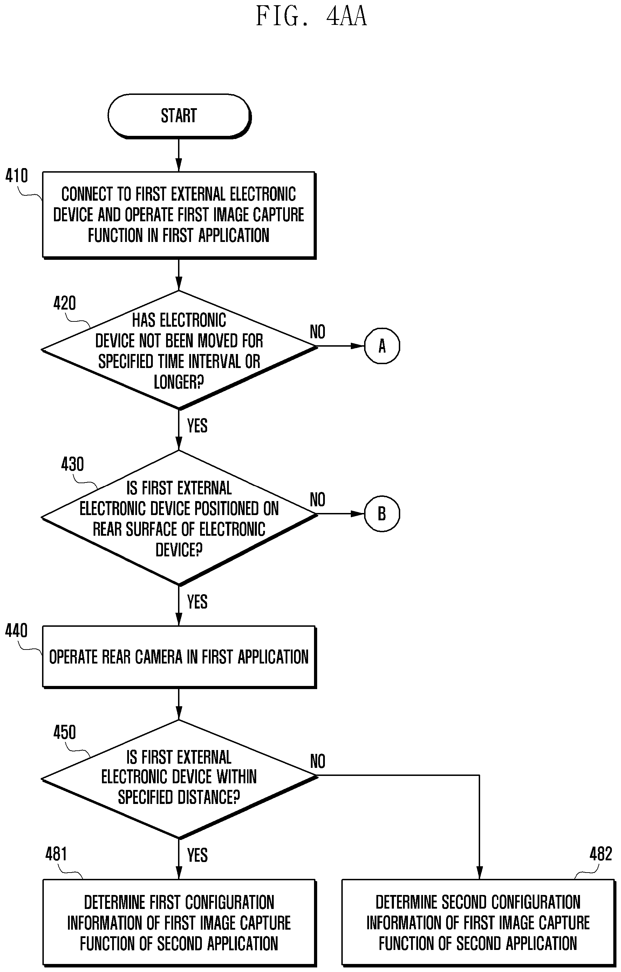

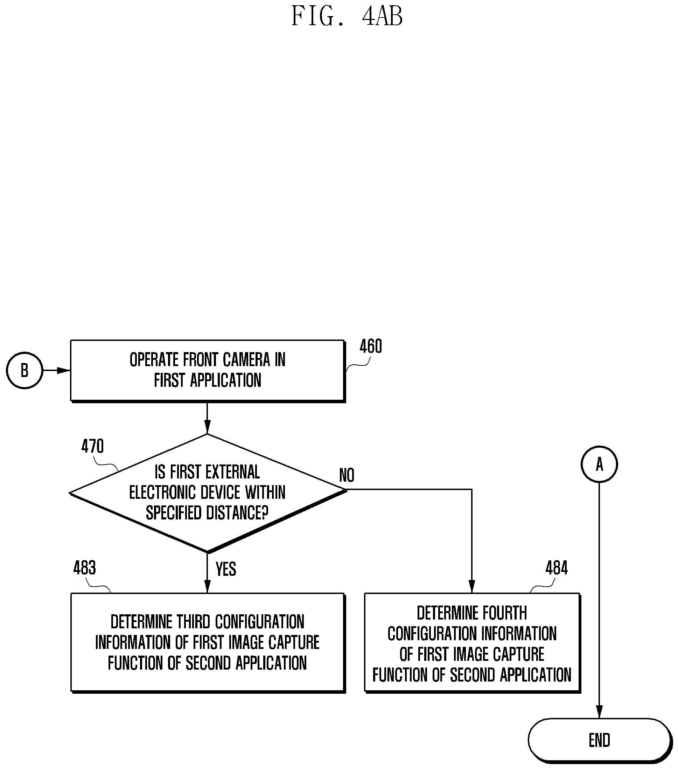

FIG. 4A (FIGS. 4AA and 4AB) is a flow chart illustrating a method for determining configuration of a second application of the first external electronic device 1000 while executing a first image-capture function in a first application by the electronic device 200 according to an embodiment.

According to an embodiment, the second application may be an auxiliary application of the first application, the auxiliary application operating in the first external device. For example, the second application may be an application for remotely controlling the first application in the first external electronic device 1000.

According to an embodiment, in the second application, configuration information that an image capture button has a first size may be a default configuration value. For example, the first external electronic device 1000 may display the image capture button in the first size when no command related to the image capture button is received.

In operation 410, the processor 220 according to an embodiment may identify that the first external electronic device 1000 is connected and execute a first image capture function in the first application.

According to an embodiment, the electronic device 200 and the first external electronic device 1000 may be connected to each other through the communication unit 290. For example, the communication unit 290 of the electronic device 200 may be paired with the first external electronic device 1000 by using a first network (e.g., the first network 198 of FIG. 1) (e.g., a short-distance communication network such as Bluetooth, wireless fidelity (Wi-Fi) or infrared data association (IrDA), BLE, and UWB) transmit or receive various information to or from the first external electronic device 1000.

According to an embodiment, the first application may be an application related to a camera. For example, the first application may be an application for capturing a photo and/or shooting a video by using the front camera 281 and/or the rear camera 282.

According to an embodiment, a first image capture function of the first application may be a photo capture function.

The processor 220 according to an embodiment may identify, in operation 420, whether the electronic device 200 does not move for a specified time interval or longer by using the sensor unit 276.

According to an embodiment, the sensor unit 276 may detect a signal (e.g., a signal related to the acceleration and/or angular speed) related to movement of the electronic device 200. The processor 220 may identify, based on the signal detected by the sensor unit 276, movement of the electronic device 200.

In operation 430, the processor 220 according to an embodiment may identify whether the first external electronic device 1000 is positioned in the rear direction of the electronic device 200 by using the communication unit 290 in response to the electronic device 200 not moving for a specified time interval or longer (e.g., yes in operation 420).

According to an embodiment, the communication unit 290 may transmit or receive a signal to or from the first external electronic device 1000. The processor 220 may obtain and/or calculate, based on a signal (e.g., a UWB and/or BLE signal) transmitted or received to or from the external electronic device 200 by the communication unit 290, the angle between the electronic device 200 and the first external electronic device 1000.

According to an embodiment, when it is assumed that a vertical axis of the electronic device 200 is a z axis, a side surface of the electronic device 200 is an x axis, a front surface of the electronic device 200 is a +y axis, and a rear surface is a - y axis, the front direction may indicate a case where the angle between the first external electronic device 1000 and the electronic device 200 is 0 degree to 180 degrees with reference to the x axis and the rear direction may indicate a case where the angle between the first external electronic device 1000 and the electronic device 200 is 180 degrees and 360 degrees with reference to the x axis.

The processor 220 according to an embodiment may operate the rear camera 282 in the first application in operation 440 in response to the first external electronic device 1000 being positioned in the rear direction of the electronic device 200 (e.g., yes in operation 430).

According to an embodiment, the processor 220 may activate the rear camera 282, deactivate the rear camera 281, and control the first application to operate using the rear camera 282. For example, the processor 220 may control the first application to capture a photo by using the rear camera 282.

The processor 220 according to an embodiment may identify, in operation 450, whether the first external electronic device 1000 is positioned within a specified distance from the electronic device 200.

According to an embodiment, the communication unit 290 may transmit or receive a signal to or from the first external electronic device 1000. The processor 220 may obtain and/or calculate, based on a signal (e.g., a UWB and/or BLE signal) transmitted or received between the communication unit 290 and the external electronic device 200, the distance from the first external electronic device 1000.

The processor 220 according to an embodiment may determine first configuration information of a first image capture function of the second application in operation 481 in response to the first external electronic device 1000 being positioned within a specified distance from the electronic device 200 (e.g., yes in operation 450).

According to an embodiment, the first configuration information for the first image capture function of the second application may include configuration information for activation of a preview display of the first application in the first external electronic device 1000 and/or configuration information for deactivation of a zoom control function of the first application in the second application.

The processor 220 according to an embodiment may determine second configuration information for the first image capture function of the second application in operation 482 in response to the first external electronic device 1000 being positioned within a specified distance from the electronic device 200 (e.g., no in operation 450).

According to an embodiment, the second configuration information for the first image capture function of the second application may include configuration information for activation of a first application preview display in the first external electronic device 1000 and/or configuration information for activation of a zoom control function of the first application in the second application.

The processor 220 according to an embodiment may operate the front camera 281 in the first application in operation 460 in response to the first external electronic device 1000 being positioned on the front surface of the electronic device 200.

According to an embodiment, the processor 220 may activate the front camera 281, deactivate the rear camera 282, and control the first application to operate using the front camera 281. For example, the processor 220 may control the first application to capture a photo by using the front camera 281.

The processor 220 according to an embodiment may identify, in operation 470, whether the first external electronic device 1000 is positioned within a specified distance from the electronic device 200.

According to an embodiment, the communication unit 290 may transmit or receive the signal to or from the first external electronic device 1000. The processor 220 may obtain and/or calculate, based on a signal (e.g., a UWB and/or BLE signal) transmitted or received between the communication unit 290 and the first external electronic device 1000, the distance from the first external electronic device 1000.

The processor 220 according to an embodiment may determine third configuration information for the first image capture function of the second application in operation 483 in response to the first external electronic device 1000 being positioned within a specified distance from the electronic device 200 (e.g., yes in operation 470).

According to an embodiment, the third configuration information for the first image capture function of the second application may include configuration information for deactivation of a preview display of the first application in the first external electronic device 1000, configuration information for deactivation of a zoom control function of the first application in the second application, and/or configuration information for changing the size of an image capture button to a second size in the second application.

The processor 220 according to an embodiment may determine fourth configuration information for the first image capture function of the second application in operation 484 in response to the first external electronic device 1000 not being positioned within a specified distance from the electronic device 200. (e.g., no in operation 540).

According to an embodiment, the fourth configuration information for the first image capture function of the second application may include configuration information for activation of a preview display of the first application in the first external electronic device 1000 and configuration information for activation of a zoom control function of the first application in the second application.

The processor 220 according to an embodiment may transmit the determined configuration information of the second application to the external electronic device 200.

According to an embodiment, the processor 220 may transmit the configuration information of the second application, determined by operations 481, 482, 483, and 484 to the first external electronic device 1000 by using the communication unit 290.

According to an embodiment, the processor 220 may transmit the information determined by operations 420, 430, and 450 to the first external electronic 1000 by using the communication unit 290, and the first external device 1000 may operate at least one of operations 481, 482, 483, and 484.

The first external electronic device 1000 according to an embodiment may apply the configuration of the second application, based on the configuration information of the second application.

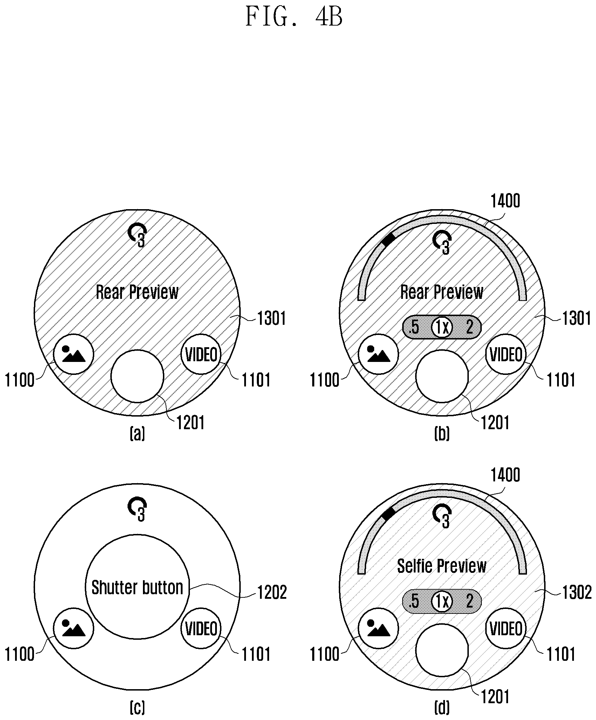

FIG. 4B illustrates a display screen of a first external electronic device 1000 based on configuration information of a second application according to an embodiment.

According to an embodiment, the first external electronic device 1000 may receive configuration information of the second application, determined by at least one of operations 481, 482, 483, and 484 from the electronic device 200.

The first external electronic device 1000 according to an embodiment may apply configuration of the second application, based on the configuration information of the second application, received from the electronic device 200.

Part (a) may be a display screen of the first external electronic device 1000 based on the first configuration information for the first image capture function of the second application according to an embodiment.

Referring to part (a), the first external electronic device 1000 may display an album application execution button 1100 and a second image capture function switching button 1101, display a photo capture button in a first size 1201, and display, based on the first configuration information for the first image capture function of the second application, a rear camera preview 1301 of the first application.

Part (b) may be a display screen of the first external electronic device 1000 based on the second configuration information for the first image capture function of the second application according to an embodiment.

Referring to part (b), the first external electronic device 1000 may display an album application execution button 1100 and a second image capture function switching button 1101, display a photo capture button in a first size 1201, and display, based on the second configuration information of the first image capture function of the second application, a rear camera preview 1301 of the first application and a zoom control 1400 of the first application.

Part (c) may be a display screen of the first external electronic device 1000 based on the third configuration information for the first image capture function of the second application according to an embodiment.

Referring to part (c), the first external electronic device 1000 may display an album application execution button 1100 and a second image capture function switching button 1101, and display, based on the third configuration information for the first image capture function of the second application, a photo capture button in a second size 1202.

Part (d) may be a display screen of the first external electronic device 1000 based on the fourth configuration information for the first image capture function of the second application according to an embodiment.

Referring to part (d), the first external electronic device 1000 may display an album application execution button 1100 and a second image capture function switching button 1101, display a photo capture button in a first size 1201, and display, based on the fourth configuration information for the first image capture function of the second application, a front camera preview 1302 of the first application and a zoom control 1400 of the first application.

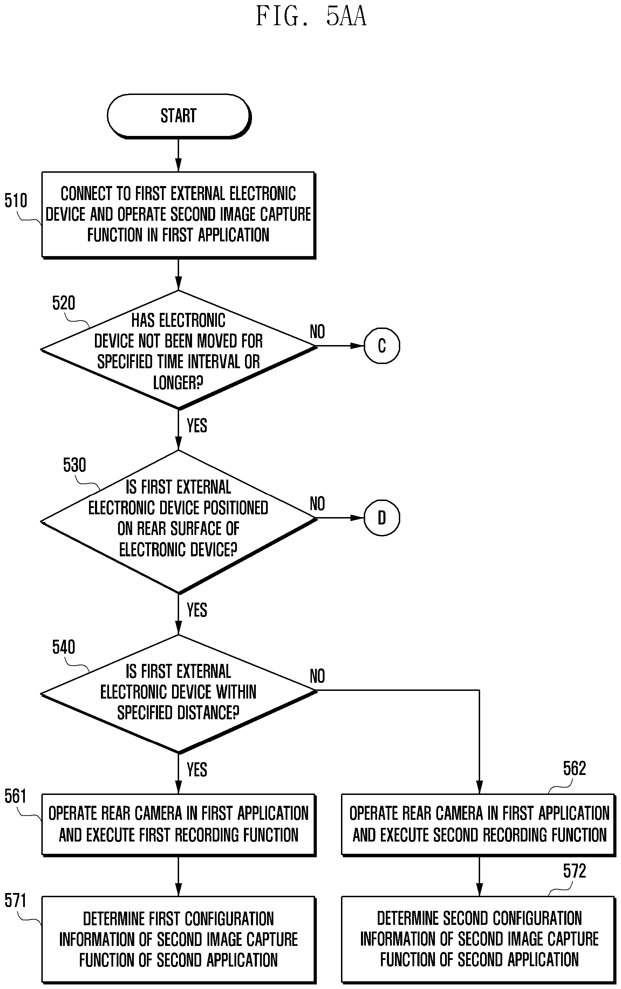

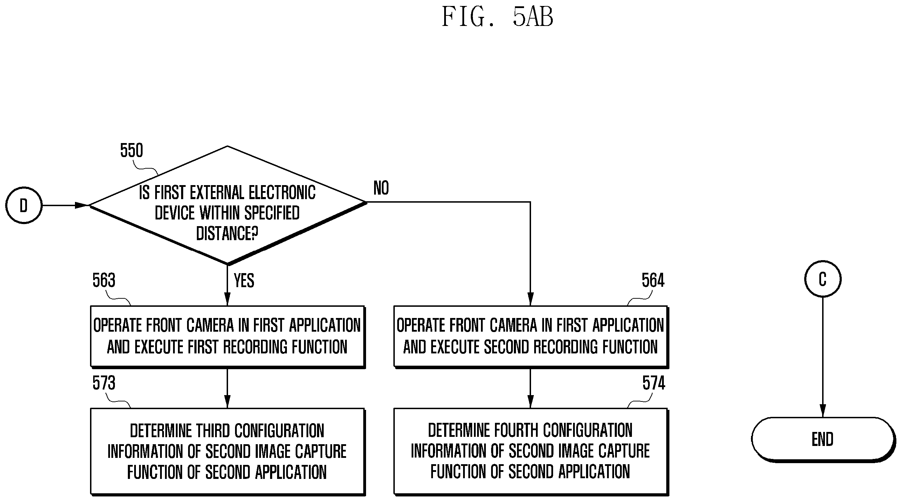

FIG. 5A (FIGS. 5AA and 5AB) is a flow chart illustrating a method for determining configuration information of a second application of the first external electronic device 1000 while executing a second image capture function in a first application by the electronic device 200 according to an embodiment.

According to an embodiment, the second application may be an auxiliary application of the first application, the auxiliary application operating in a first external device. For example, the second application may be an application for remotely controlling the first application in the first external electronic device 1000.

According to an embodiment, in the second application, configuration information that an image capture button has a first size may be a default configuration value. For example, the first external electronic device 1000 may display the image capture button in the first size when no command related to the image capture button is received.

The processor 220 according to an embodiment may identify connection with the first external electronic device 1000 and execute a second image capture function in the first application in operation 510.

According to an embodiment, the electronic device 200 and the external electronic device 1000 may be connected to each other through the communication unit 290. For example, the communication unit 290 of the electronic device 200 may be paired with the first external electronic device 1000 by using the first network (e.g., the first network 198 of FIG. 1 (e.g., a short-distance communication network such as Bluetooth, wireless fidelity (Wi-Fi) direct or infrared data association (IrDA), BLE, and UWB) and transmit or receive various information to or from the first external electronic device 1000.

According to an embodiment, the first application may be an application related to a camera. For example, the first application may be an application for capturing a photo and/or shooting a video by using the front camera 281 and/or the rear camera 282.

According to an embodiment, the second image capture function of the first application may be a video shoot function.

The processor 220 according to an embodiment may identify whether the electronic device 200 does not move for a specified time interval or longer by using the sensor unit 276 in operation 520.

According to an embodiment, the sensor unit 276 may detect a signal (e.g., a signal related to the acceleration and/or angular speed) related to movement of the electronic device 200. The processor 220 may identify, based on the signal detected by the sensor unit 276, movement of the electronic device 200.

In operation 530, the processor 220 according to an embodiment may identify whether the first external electronic device 1000 is positioned in the rear direction of the electronic device 200 by using the communication unit 290 in response to the electronic device 200 not moving for a specified time interval or longer (e.g., yes in operation 520.

According to an embodiment, the communication unit 290 may transmit or receive a signal to or from the first external electronic device 1000. The processor 220 may obtain and/or calculate, based on a signal (e.g., a UWB and/or BLE signal) transmitted or received to or from the external electronic device 1000 by the communication unit 290, the angle between the electronic device 200 and the first external electronic device 1000.

According to an embodiment, when it is assumed that a vertical axis of the electronic device 200 is a z axis, a side surface of the electronic device 200 is an x axis, a front surface of the electronic device 200 is a +y axis, and a rear surface is a - y axis, the front direction may indicate a case where the angle between the first external electronic device 1000 and the electronic device 200 is 0 degree to 180 degrees with reference to the x axis and the rear direction may indicate a case where the angle between the first external electronic device 1000 and the electronic device 200 is 180 degrees and 360 degrees with reference to the x axis.

In operation 540, the processor 220 according to an embodiment may identify whether the first external electronic device 1000 is within a specified distance from the electronic device 200 in response to the first external electronic device 1000 being positioned in the rear direction of the electronic device 200 (e.g., yes in operation 530).

According to an embodiment, the communication unit 290 may transmit or receive a signal to or from the first external electronic device 1000. The processor 220 may obtain and/or calculate, based on a signal (e.g., a UWB and/or BLE signal) transmitted or received between the communication unit 290 and the external electronic device 200, the distance from the first external electronic device 1000.

The processor 220 according to an embodiment may control the first application to operate the rear camera 282 and execute a first recording function in operation 561 in response to the first external electronic device 1000 being positioned within a specified distance from the electronic device 200 (e.g., yes in operation 540).

According to an embodiment, the processor 220 may activate the rear camera 282, deactivate the rear camera 281, and control the first application to operate using the rear camera 282. For example, the processor 220 may control the first application to shoot a video by using the rear camera 282.

According to an embodiment, the first recording function may be a function of recording a voice of a video by using the microphone 270 of the electronic device 200.

The processor 220 according to an embodiment may determine first configuration information for a second image capture function of the second application in operation 571.

According to an embodiment, the first configuration information for the second image capture function of the second application may include configuration information for activation of a preview display of the first application in the first external electronic device 1000, configuration information for deactivation of a zoom control function of the first application in the second application, configuration information for deactivation of a microphone of the first external electronic device 1000, and/or configuration information for deactivation of a microphone configuration icon of the first external electronic device 1000.

The processor 220 according to an embodiment may control the first application to operate the rear camera 282 and execute a second recording function in operation 562 in response to the first external electronic device 1000 not being positioned within a specified distance from the electronic device 200 (e.g., no in operation 540).

According to an embodiment, the processor 220 may activate the rear camera 282, deactivate the front camera 281, and control the first application to operate using the camera 282. For example, the processor 220 may control the first application to shoot a video by using the rear camera 282.

According to an embodiment, the second recording function may be a function of recording a voice of a video by using the microphone 270 of the electronic device 200 and the microphone of the first external electronic device 1000.

The processor 220 according to an embodiment may determine second configuration information for a second image capture function of the second application in operation 572.

According to an embodiment, the second configuration information for the second image capture function of the second application may include configuration information for activation of a preview display of the first application in the first external electronic device 1000, configuration information for activation of a zoom control function of the first application in the second application, configuration information for activation of a microphone of the first external electronic device 1000, and/or configuration information for activation of a microphone configuration icon of the first external electronic device 1000.

The processor 220 according to an embodiment may identify whether the first external electronic device 1000 is positioned within a specified distance from the electronic device 200 in operation 550 in response to the first external electronic device 1000 being positioned on a front surface of the electronic device 200 (e.g., no in operation 530).

According to an embodiment, the communication unit 290 may transmit or receive a signal to or from the first external electronic device 1000. The processor 220 may obtain and/or calculate, based on a signal (e.g., a UWB and/or BLE signal) transmitted or received between the communication unit 290 and the external electronic device 200, the distance from the first external electronic device 1000.

The processor 220 according to an embodiment may control the first application to operate the front camera 281 and execute a first recording function in operation 563 in response to the first external electronic device 1000 being positioned within a specified distance from the electronic device 200 (e.g., yes in operation 550).

According to an embodiment, the processor 220 may activate the front camera 281, deactivate the rear camera 282, and control the first application to operate using the rear camera 281. For example, the processor 220 may control the first application to shoot a video by using the front camera 281.

According to an embodiment, the first recording function may be a function of recording a voice of a video by using the microphone 270 of the electronic device 200.

The processor 220 according to an embodiment may determine third configuration information for a second image capture function of the second application in operation 573.

According to an embodiment, the third configuration information for the second image capture function of the second application may include configuration information for deactivation of a preview display of the first application in the first external electronic device 1000, configuration information for deactivation of a zoom control function of the first application in the second application, configuration information for changing the size of an image capture button to a second size in the second application, configuration information for deactivation of a microphone of the first external electronic device 1000, and/or configuration information for deactivation of a microphone configuration icon of the first external electronic device 1000.

The processor 220 according to an embodiment may control the first application to operate the rear camera 281 and execute a second recording function in operation 564 in response to the first external electronic device 1000 not being positioned within a specified distance from the electronic device 200 (e.g., no in operation 550).

According to an embodiment, the processor 220 may activate the front camera 281, deactivate the rear camera 282, and control the first application to operate using the front camera 281. For example, the processor 220 may control the first application to shoot a video by using the front camera 281.

According to an embodiment, the second recording function may be a function of recording a voice of a video by using the microphone 270 of the electronic device 200 and the microphone of the first external electronic device 1000.

The processor 220 according to an embodiment may determine fourth configuration information for a second image capture function of the second application in operation 574.

According to an embodiment, the fourth configuration information for the second image capture function of the second application may include configuration information for activation of a preview of the first application in the first external electronic device 1000, configuration information for activation of a zoom control function of the first application in the second application, configuration information for activation of a microphone of the first external electronic device 1000, and/or configuration information for activation of a microphone configuration icon of the first external electronic device 1000.

The processor 220 according to an embodiment may transmit the determined configuration information of the second application to the first external electronic device 1000.

According to an embodiment, the processor 220 may transmit the configuration information of the second application, determined by at least one of operations 571, 572, 573, and 574 to the first external electronic device 1000 by using the communication unit 290.

According to an embodiment, the processor 220 may transmit the information determined in operations 520, 530, and 540 to the first external electronic device 1000 by using the communication unit 290, and operate at least one of operations 571, 572, 573, and 574 in the first external electronic device 1000.

The first external electronic device 1000 according to an embodiment may apply, based on the configuration information of the second application, the configuration of the second application.

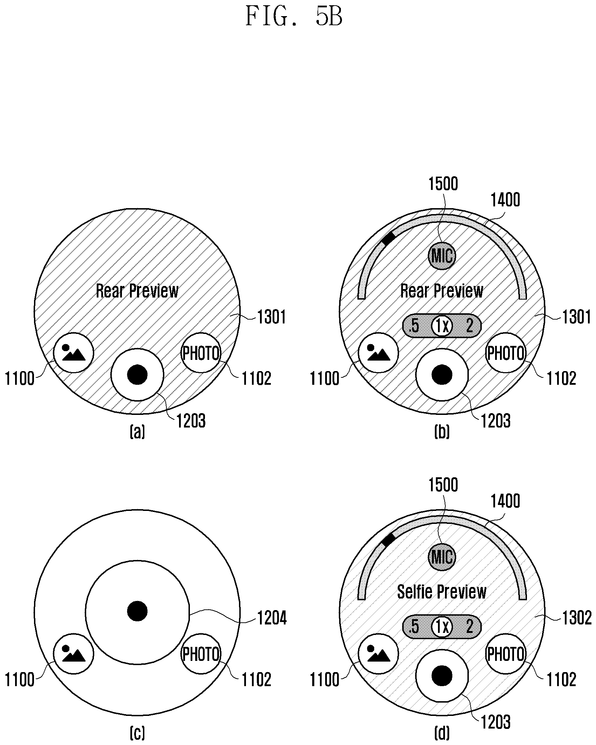

FIG. 5B illustrates a display screen of a first external electronic device 1000 based on configuration information of a second application according to an embodiment.

According to an embodiment, the first external electronic device 1000 may receive configuration information of the second application, determined by at least one of operations 571, 572, 573, and 574 from the electronic device 200.

The first external electronic device 1000 according to an embodiment may apply configuration of the second application, based on the configuration information of the second application, received from the electronic device 200.

Part (a) may be a display screen of the first external electronic device 1000 based on the first configuration information for the second image capture function of the second application according to an embodiment.

Referring to part (a), the first external electronic device 1000 may display an album application execution button 1100 and a first image capture function switching button 1102, display a video shoot button in a first size 1203, and display, based on the first configuration information for the first image capture function of the second application, a rear camera preview 1301 of the first application.

Part (b) may be a display screen of the first external electronic device 1000 based on the second configuration information for the second image capture function of the second application according to an embodiment.

Referring to part (b), the first external electronic device 1000 may display an album application execution button 1100 and a first image capture function switching button 1102, display a video shoot button in a first size 1203, and display, based on the second configuration information of the first image capture function of the second application, a rear camera preview 1301 of the first application and a zoom control 1400 and a microphone configuration icon 1500 of the first application.

Part (c) may be a display screen of the first external electronic device 1000 based on the third configuration information for the second image capture function of the second application according to an embodiment.

Referring to part (c), the first external electronic device 1000 may display an album application execution button 1100 and a first image capture function switching button 1102, and display, based on the third configuration information for the second image capture function of the second application, a video shoot button in a second size 1204.

Part (d) may be a display screen of the first external electronic device 1000 based on the fourth configuration information for the second image capture function of the second application according to an embodiment.

Referring to part (d), the first external electronic device 1000 may display an album application execution button 1100 and a first image capture function switching button 1102, display a video shoot button in a first size 1203, and display, based on the fourth configuration information for the second image capture function of the second application, a front camera preview 1302 of the first application and a zoom control 1400 and a microphone configuration icon 1500 of the first application.

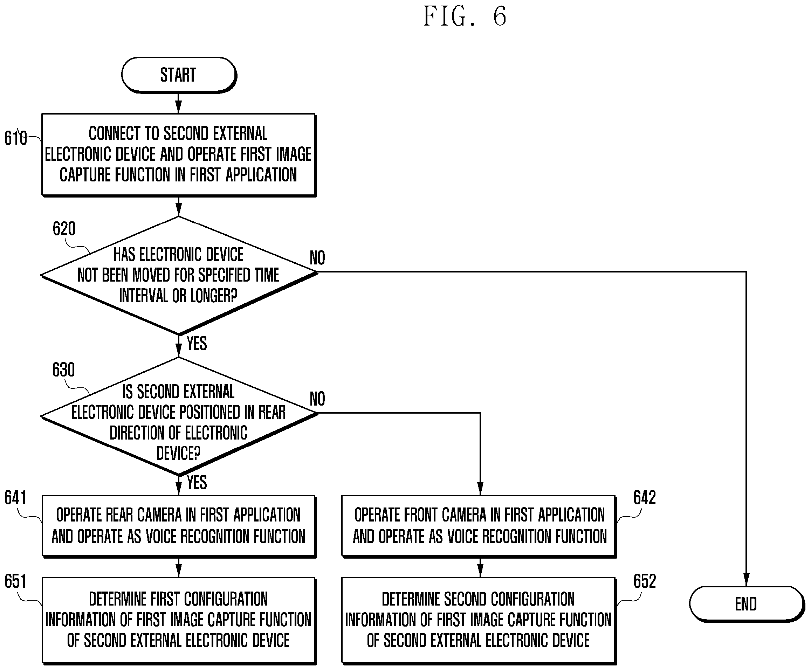

FIG. 6 is a flow chart illustrating a method for determining configuration information of a second external electronic device 2000 while executing a first image capture function in a first application by an electronic device 200 according to an embodiment.

The processor 220 according to an embodiment may identify connection with the second external electronic device 200 and execute the first image capture function in the first application in operation 610.

According to an embodiment, the electronic device 200 and the second external electronic device 2000 may be connected to each other through a communication unit 290. For example, the communication unit 290 of the electronic device 200 may be paired with each other using a first network (e.g., the first network 198 of FIG. 1) (e.g., a short-distance communication network such as Bluetooth, wireless fidelity (Wi-Fi) direct or infrared data association (IrDA), BLE, and UWB) and transmit or receive various information to or from the second external electronic device 2000.

According to an embodiment, the first application may be an application related to a camera. For example, the first application may be an application for capturing a photo and/or shooting a video by using a front camera 281 and/or a rear camera 282.

According to an embodiment, the first image capture function of the first application may be a photo capture function.

The processor 220 according to an embodiment may identify whether the electronic device 200 does not move for a specified time interval by using a sensor unit 276 in operation 620.

According to an embodiment, the sensor unit 276 may detect a signal related to movement of the electronic device 200 (e.g., a signal related to acceleration and/or angular speed). The processor 220 may identify, based on the signal detected by the sensor unit 276, the movement of the electronic device 200.

The processor 220 according to an embodiment may identify whether the first external electronic device 200 is positioned in a rear direction of the electronic device 200 by using the communication unit 290 in operation 630 in response to the electronic device 200 not moving for a specified time interval or longer (e.g., yes in operation 620).

According to an embodiment, the communication unit 290 may transmit or receive the signal to or from the external electronic device 200. The processor 220 may obtain and/or calculate, based on a signal (e.g., a UWB and/or BLE signal) transmitted or received between the second external electronic device 2000 and the communication unit 290, the angle between the electronic device 200 and the second external electronic device 2000.

According to an embodiment, when it is assumed that a vertical axis of the electronic device 200 is a z axis, a side surface of the electronic device 200 is an x axis, a front surface of the electronic device 200 is a +y axis, and a rear surface is a - y axis, the front direction may indicate a case where the angle between the second external electronic device 2000 and the electronic device 200 is 0 degree to 180 degrees with reference to the x axis and the rear direction may indicate a case where the angle between the second external electronic device 2000 and the electronic device 200 is 180 degrees and 360 degrees with reference to the x axis.

The processor 220 according to an embodiment may control the first application to operate the rear camera 282 and operate as a voice recognition function in operation 641 in response to the second external electronic device 2000 positioned in the rear direction of the electronic device 200 (e.g., yes in operation 630).

According to an embodiment, the processor 220 may activate the rear camera 282, deactivate the front camera 281, and control the first application to operate using the rear camera 282. For example, the processor 220 may control the first application to capture a photo by using the rear camera 282.

According to an embodiment, the voice recognition function may be a function of controlling the first application, based on voice information acquired using a voice input device (e.g., a microphone 270 of the electronic device 200 and/or a microphone of the second external electronic device 2000).

The processor 220 according to an embodiment may determine first configuration information of the first image capture function of the second external electronic device 2000 in operation 651.

According to an embodiment, first configuration information of the first image capture function of the second external electronic device 2000 may include configuration information of collecting a voice command by using the microphone of the second external electronic device 2000 and/or a voice (e.g., "A photo is taken when you say "click.") providing guidance that a voice command is collected by using the microphone of the second external electronic device 2000.

The processor 220 according to an embodiment may control the first application to operate the rear camera 281 and execute a voice recognition function in operation 642 in response to the second electronic device 2000 positioned on a front surface of the electronic device 200 (e.g., no in operation 630).

According to an embodiment, the processor 220 may activate the front camera 281, deactivate the rear camera 282, and control the first application to operate using the front camera 281. For example, the processor 220 may control the first application to capture a photo by using the front camera 281.

The processor 220 according to an embodiment may determine second configuration information of the first image capture function of the second external electronic device 2000 in operation 652.

According to an embodiment, the second configuration information of the first image capture function of the second external electronic device 2000 may include configuration information for collecting a voice command by using the microphone of the second external electronic device 2000 and/or a voice (e.g., "A photo is taken in two seconds when you say "click.") for providing guidance that a voice command is collected using the microphone of the second external electronic device 2000.

The processor 220 according to an embodiment may transmit the determined configuration information of the second external electronic device 2000 to the second external electronic device 2000.

According to an embodiment, the processor 220 may transmit the configuration information of the second external electronic device 2000, determined by operation 651 and/or operation 652, to the second external electronic device 2000 by using the communication unit 290.

The second external electronic device 2000 according to an embodiment may apply, based on the configuration information of the second external electronic device 2000, received from the electronic device 200, the configuration of the second external electronic device 2000, and output a guidance voice.

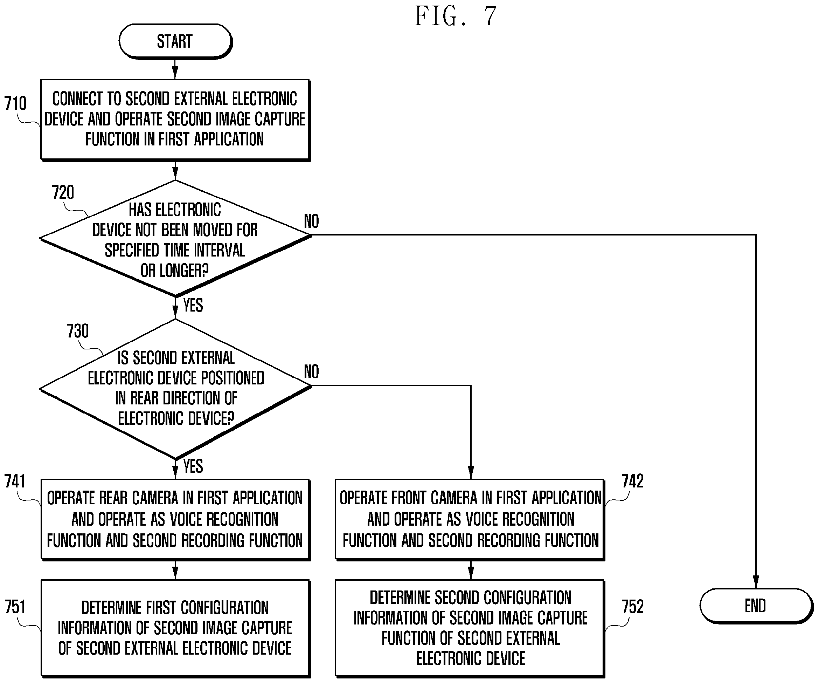

FIG. 7 is a flow chart illustrating a method for determining configuration information of a second external electronic device 2000 when executing a second image capture function in a first application by an electronic device 200 according to an embodiment.

The processor 220 according to an embodiment may identify connection to the second external electronic device 2000 may execute the second image capture function in the first application in operation 710.

According to an embodiment, the electronic device 200 and the second external electronic device 2000 may be connected to each other through a communication unit 290. For example, the communication unit 290 of the electronic device 200 may be paired with each other using a first network (e.g., the first network 198 of FIG. 1) (e.g., a short-distance communication network such as Bluetooth, wireless fidelity (Wi-Fi) direct or infrared data association (IrDA), BLE, and UWB) and transmit or receive various information to or from the second external electronic device 2000.

According to an embodiment, the first application may be an application related to a camera. For example, the first application may be an application for capturing a photo and/or shooting a video by using a front camera 281 and/or a rear camera 282.

According to an embodiment, the second image capture function of the first application may be a video shoot function.

The processor 220 according to an embodiment may identify whether the electronic device 200 does not move for a specified time interval by using a sensor unit 276 in operation 720.

According to an embodiment, the sensor unit 276 may detect a signal related to movement of the electronic device 200 (e.g., a signal related to acceleration and/or angular speed). The processor 220 may identify, based on the signal detected by the sensor unit 276, the movement of the electronic device 200.

The processor 220 according to an embodiment may identify whether the first external electronic device 200 is positioned in a rear direction of the electronic device 200 by using the communication unit 290 in operation 730 in response to the electronic device 200 not moving for a specified time interval or longer (e.g., yes in operation 720).

According to an embodiment, the communication unit 290 may transmit or receive the signal to or from the external electronic device 200. The processor 220 may obtain and/or calculate, based on a signal (e.g., a UWB and/or BLE signal) transmitted or received between the second external electronic device 2000 and the communication unit 290, the angle between the electronic device 200 and the second external electronic device 2000.

According to an embodiment, when it is assumed that a vertical axis of the electronic device 200 is a z axis, a side surface of the electronic device 200 is an x axis, a front surface of the electronic device 200 is a +y axis, and a rear surface is a - y axis, the front direction may indicate a case where the angle between the second external electronic device 2000 and the electronic device 200 is 0 degree to 180 degrees with reference to the x axis and the rear direction may indicate a case where the angle between the second external electronic device 2000 and the electronic device 200 is 180 degrees and 360 degrees with reference to the x axis.

The processor 220 according to an embodiment may control the first application to operate the rear camera 282 and execute a voice recognition function and a second recording function in operation 741 in response to the second external electronic device 2000 positioned in the rear direction of the electronic device 200 (e.g., yes in operation 730).

According to an embodiment, the processor 220 may activate the rear camera 282, deactivate the front camera 281, and control the first application to operate using the rear camera 282. For example, the processor 220 may control the first application to shoot a video by using the rear camera 282.

According to an embodiment, the voice recognition function may be a function of controlling the first application, based on voice information acquired using a voice input device (e.g., a microphone 270 of the electronic device 200 and/or a microphone of the second external electronic device 2000).

According to an embodiment, the second recording function may be a function of recording a video by using the microphone 270 of the electronic device 200 and the microphone of the second external electronic device 200.

The processor 220 according to an embodiment may determine first configuration information of the second image capture function of the second external electronic device 2000 in operation 751.

According to an embodiment, first configuration information of the first image capture function of the second external electronic device 2000 may include configuration information of collecting a voice command by using the microphone of the second external electronic device 2000, configuration information of recording a video by using the microphone 270 of the second electronic device 200, and/or a voice (e.g., "A video is shot when you say "shoot a video". Recording is performed using both the microphone 270 of the electronic device 200 and the microphone of the second external electronic device 2000.") providing guidance that a voice command is collected using the microphone of the second external electronic device 2000.

The processor 220 according to an embodiment may control the first application to operate the rear camera 281 and operate as a voice recognition function and the second recording function in operation 742 in response to the second electronic device 2000 positioned on a front surface of the electronic device 200 (e.g., no in operation 730).

According to an embodiment, the processor 220 may activate the front camera 281, deactivate the rear camera 282, and control the first application to operate using the front camera 281. For example, the processor 220 may control the first application to capture a photo by using the front camera 281.

According to an embodiment, the voice recording function may be a function of controlling the first application, based on voice information acquired using a voice input device (e.g., the microphone 270 of the electronic device 200 and/or the microphone of the second external electronic device 2000).

According to an embodiment, the second recording function may be a function of recording a video by using the microphone 270 of the electronic device 200 and/or the microphone of the second external electronic device 2000.

The processor 220 according to an embodiment may determine second configuration information of the second image capture function of the second external electronic device 2000 in operation 752.

According to an embodiment, the second configuration information of the second image capture function of the second external electronic device 2000 may include configuration information for collecting a voice command by using the microphone of the second external electronic device 2000, configuration information of recording a video by using the microphone of the second electronic device 200, and/or a voice (e.g., "A video is shot in two seconds when you say "shoot a video". Recording is performed using both the microphone 270 of the electronic device 200 and the microphone of the second external electronic device 2000.") for providing guidance that a voice command is collected using the microphone of the second external electronic device 2000.

The processor 220 according to an embodiment may transmit the determined configuration information of the second external electronic device 2000 to the second external electronic device 2000.

According to an embodiment, the processor 220 may transmit the configuration information of the second external electronic device 2000, determined by operation 751 and/or operation 752, to the second external electronic device 2000 by using the communication unit 290.

The second external electronic device 2000 according to an embodiment may apply, based on the configuration information of the second external electronic device 2000, received from the electronic device 200, the configuration of the second external electronic device 2000, and output a guidance voice.

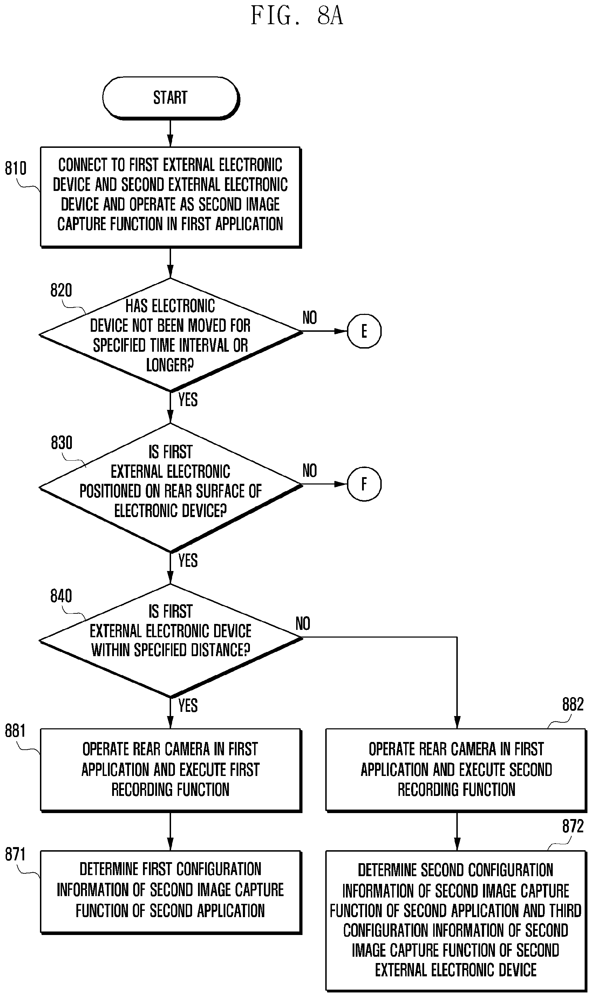

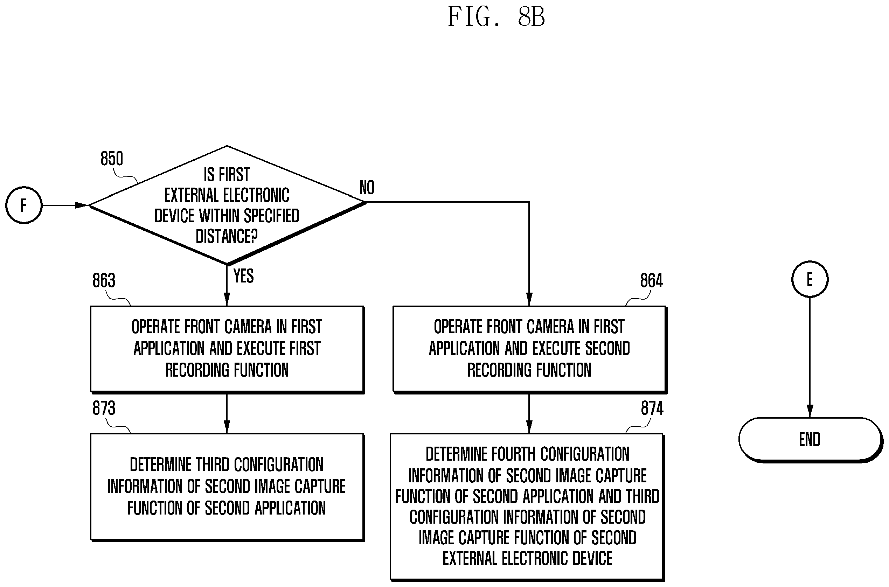

FIG. 8 (FIGS. 8A and 8B) is a flow chart illustrating a method for determining configuration information of a second application of a first external electronic device 1000 and configuration information of a second external electronic device 2000 when operating as a second image capture function in a first application by an electronic device 200 according to an embodiment.

According to an embodiment, the second application may be an auxiliary application of the first application, the auxiliary application operating in the first external device. For example, the second application may be an application for remotely controlling the first application in the first external electronic device 1000.

According to an embodiment, in the second application, configuration information that an image capture button has a first size may be a default configuration value. For example, the first external electronic device 1000 may display the image capture button in the first size when no command related to the image capture button is received.

**In** operation 810, the processor 220 according to an embodiment may identify that the first external electronic device 1000 and/or the second external electronic device 2000 is connected and execute a second image capture function in the first application.

According to an embodiment, the electronic device 200 and the first external electronic device 1000 and/or the second external electronic device 2000 may be connected to each other through the communication unit 290. For example, the communication unit 290 of the electronic device 200 may be paired with the first external electronic device 1000 and/or the second external electronic device 2000 by using a first network (e.g., the first network 198 of FIG. 1) (e.g., a short-distance communication network such as Bluetooth, wireless fidelity (Wi-Fi) or infrared data association (IrDA), BLE, and UWB) transmit or receive various information to or from the first external electronic device 1000 and/or the second external electronic device 2000.

According to an embodiment, the first application may be an application related to a camera. For example, the first application may be an application for capturing a photo and/or shooting a video by using the front camera 281 and/or the rear camera 282.

According to an embodiment, a second image capture function of the first application may be a video shoot function.

The processor 220 according to an embodiment may identify, in operation 820, whether the electronic device 200 does not move for a specified time interval or longer by using the sensor unit 276.

According to an embodiment, the sensor unit 276 may detect a signal (e.g., a signal related to the acceleration and/or angular speed) related to movement of the electronic device 200. The processor 220 may identify, based on the signal detected by the sensor unit 276, movement of the electronic device 200.

In operation 830, the processor 220 according to an embodiment may identify whether the first external electronic device 1000 is positioned in the rear direction of the electronic device 200 by using the communication unit 290 in response to the electronic device 200 not moving for a specified time interval or longer (e.g., yes in operation 820).

According to an embodiment, the communication unit 290 may transmit or receive a signal to or from the external electronic device 200. The processor 220 may obtain and/or calculate, based on a signal (e.g., a UWB and/or BLE signal) transmitted or received to or from the external electronic device 1000 by the communication unit 290, the angle between the electronic device 200 and the first external electronic device 1000.

According to an embodiment, when it is assumed that a vertical axis of the electronic device 200 is a z axis, a side surface of the electronic device 200 is an x axis, a front surface of the electronic device 200 is a +y axis, and a rear surface is a - y axis, the front direction may indicate a case where the angle between the first external electronic device 1000 and the electronic device 200 is 0 degree to 180 degrees with reference to the x axis and the rear direction may indicate a case where the angle between the first external electronic device 1000 and the electronic device 200 is 180 degrees and 360 degrees with reference to the x axis.

The processor 220 according to an embodiment may identify whether the first external electronic device 1000 is positioned within a specified distance from the electronic device 200 in operation 840 in response to the first external electronic device 1000 being positioned in the rear direction of the electronic device 200 (e.g., yes in operation 830).

According to an embodiment, the communication unit 290 may transmit or receive a signal to or from the first external electronic device 1000. The processor 220 may obtain and/or calculate, based on a signal (e.g., a UWB and/or BLE signal) transmitted or received between the communication unit 290 and the first external electronic device 1000, the distance from the first external electronic device 1000.

The processor 220 according to an embodiment control the first application to operate the rear camera 282 and execute a first recording function in operation 861 in response to the first external electronic device 1000 being positioned within a specified distance from the electronic device 200 (e.g., yes in operation 840).

According to an embodiment, the processor 220 may activate the rear camera 282, deactivate the front camera 281, and control the first application to operate using the rear camera 282. For example, the processor 220 may control the first application to shoot a video by using the rear camera 282.

According to an embodiment, the first recording function may be a function of recording a voice of a video by using the microphone 270 of the electronic device 200.

The processor 220 according to an embodiment may determine first configuration information for a second image capture function of a second application in operation 871.

According to an embodiment, the first configuration information for the second image capture function of the second application may include configuration information for activation of a preview display of the first application in the first external electronic device 1000, configuration information for deactivation of a zoom control function of the first application in the second application, configuration information for deactivation of a microphone of the first external electronic device 1000, and/or configuration information for deactivation of a microphone configuration icon of the first external electronic device 1000.

The processor 220 according to an embodiment control the first application to operate the rear camera 282 and execute a second recording function in operation 862 in response to the first external electronic device 1000 not being positioned within a specified distance from the electronic device 200 (e.g., no in operation 840).

According to an embodiment, the processor 220 may activate the rear camera 282, deactivate the front camera 281, and control the first application to operate using the rear camera 282. For example, the processor 220 may control the first application to shoot a video by using the rear camera 282.

According to an embodiment, the second recording function may be a function of recording a voice of a video by using the microphone 270 of the electronic device 200 and the microphone of the second external electronic device 2000.

The processor 220 according to an embodiment may determine second configuration information for a second image capture function of a second application and third configuration information for a second image capture function of the second external electronic device 2000 in operation 872.

According to an embodiment, the second configuration information for the second image capture function of the second application may include configuration information for activation of a preview display of the first application in the first external electronic device 1000, configuration information for activation of a zoom control function of the first application in the second application, configuration information for activation of a microphone of the first external electronic device 1000, and/or configuration information for activation of a microphone configuration icon of the first external electronic device 1000.

According to an embodiment, third configuration information for the second image capture function of the second external electronic device 2000 may include configuration information of recording a video by using the microphone 270 of the second electronic device 200.

The processor 220 according to an embodiment may identify whether the first external electronic device 1000 is positioned within a specified distance from the electronic device 200 in operation 850 in response to the first external electronic device 1000 being positioned on a front surface of the electronic device 200 (e.g., no in operation 830).

According to an embodiment, the communication unit 290 may transmit or receive a signal to or from the first external electronic device 1000. The processor 220 may obtain and/or calculate, based on a signal (e.g., a UWB and/or BLE signal) transmitted or received between the communication unit 290 and the first external electronic device 1000, the distance from the first external electronic device 1000.

The processor 220 according to an embodiment may control the first application to operate the front camera 281 and execute a first recording function in operation 863 in response to the first external electronic device 1000 being positioned within a specified distance from the electronic device 200 (e.g., yes in operation 850).

The processor 220 according to an embodiment may activate the front camera 281, deactivate the rear camera 282, and control the first application to operate using the rear camera 281. For example, the processor 220 may control the first application to shoot a video by using the front camera 281.

According to an embodiment, the first recording function may be a function of recording a voice of a video by using the microphone 270 of the electronic device 200.

The processor 220 according to an embodiment may determine third configuration information for a second image capture function of a second application in operation 873.

According to an embodiment, the third configuration information for the second image capture function of the second application may include configuration information for deactivation of a preview display of the first application in the first external electronic device 1000, configuration information for deactivation of a zoom control function of the first application in the second application, configuration information for changing the size of an image capture button to a second size in the second application, configuration information for deactivation of the microphone of the first external electronic device 1000, and/or configuration information for deactivation of a microphone configuration icon of the first external electronic device 1000.

The processor 220 according to an embodiment may control the first application to operate the front camera 281 and execute a second recording function in operation 864 in response to the first external electronic device 1000 not being positioned within a specified distance from the electronic device 200 (e.g., no in operation 850).

According to an embodiment, the processor 220 may activate the front camera 281, deactivate the rear camera 282, and control the first application to operate using the front camera 281. For example, the processor 220 may control the first application to shoot a video by using the front camera 281.

According to an embodiment, the second recording function may be a function of recording a voice of a video by using the microphone 270 of the electronic device 200 and the microphone of the second external electronic device 2000.

The processor 220 according to an embodiment may determine fourth configuration information for a second image capture function of a second application and third configuration information for a second image capture function of the second external electronic device 2000 in operation 874.

According to an embodiment, the fourth configuration information for the second image capture function of the second application may include configuration information for activation of a preview display of the first application in the first external electronic device 1000, configuration information for activation of a zoom control function of the first application in the second application, configuration information for activation of a microphone of the first external electronic device 1000, and/or configuration information for activation of a microphone configuration icon of the first external electronic device 1000.

According to an embodiment, third configuration information for the second image capture function of the second external electronic device 2000 may include configuration information of recording a video by using the microphone 270 of the second external electronic device 2000.

The processor 220 according to an embodiment may transmit the determined configuration information of the second application to the first external electronic device 1000.

According to an embodiment, the processor 220 may transmit the configuration information of the second application, determined by at least one of operations 871, 872, 873, and 874 to the first external electronic device 1000 by using the communication unit 290.

According to an embodiment, the processor 220 may transmit the configuration information of the second external electronic device 2000, determined by operations 872 and/or 874, to the second external electronic device 2000 by using the communication unit 290.

According to an embodiment, the processor 220 may transmit the information determined by operations 820, 830, and 840 to the first external electronic device 1000 by using the communication unit 290, and operate at least one of operations 871, 872, 873, and 874 in the first external electronic device 1000.

The first external electronic device 1000 according to an embodiment may apply the configuration of the second application, based on the configuration information of the second application.

The second external electronic device 2000 according to an embodiment may apply the configuration of the second external electronic device 2000, based on the configuration information of the second external electronic device 2000.

An electronic device according to an embodiment may include a communication unit, a sensor unit, a camera unit including a front camera and a rear camera, a processor, and a memory operatively connected to the processor.

**In** the electronic device according to an embodiment, the memory may store instructions which, when executed, cause the electronic device to connect an external electronic device and the electronic device, while operating a first application including a photo capture function and a video shoot function related to the camera unit, detect movement of the electronic device by using the sensor unit, in response to the electronic device not moving for a specified time interval or longer, obtain a direction of the external electronic device by using the communication unit, determine, based on the direction of the external electronic device, configuration information of a second application corresponding to an auxiliary application of the first application, which operates in the external electronic device, and transmit the determined configuration information of the second application to the external electronic device.

The detecting of movement of the electronic device by the electronic device according to an embodiment by using the sensor unit may be substituted by detecting movement of the electronic device by using the sensor unit, recognizing movement of the electronic device by using the sensor unit, determining movement of the electronic device by using the sensor unit, and/or identifying movement of the electronic device by using the sensor unit, or may include the detecting, the recognizing, the determining, and/or the identifying.

**In** the electronic device according to an embodiment, the instructions may cause the electronic device to identify the direction of the external electronic device by using the communication unit, in response to the external electronic device being positioned in a front direction of the electronic device, activate the front camera, deactivate the rear camera, and operate the first application by using the front camera, and in response to the external electronic device being positioned in a rear direction of the electronic device, activate the rear camera, deactivate the front camera, and operate the first application by using the rear camera.

In the electronic device according to an embodiment, the instructions may cause the electronic device to identify a position of the external electronic device by using the communication unit, and determine, based on whether the external electronic device is positioned within a specified distance, configuration information of the second application.

In the electronic device according to an embodiment, the identifying of the position of the external electronic device by using the communication unit may be substituted by detecting the position of the external electronic device by using the communication unit, recognizing the position of the external electronic device by using the communication unit, determining the position of the external electronic device by using the communication unit, and/or sensing the position of the external electronic device by using the communication unit, or may include the detecting, the recognizing, the determining, and the sensing.

In the electronic device according to an embodiment, the instructions may cause the electronic device to identify the position of the external electronic device by using the communication unit while the photo capture function is executed in the first application.

In the electronic device according to an embodiment, in response to the external electronic device being positioned on a rear surface of the electronic device and being positioned within a specified distance, the configuration information of the second application may include configuration information for activation of a preview display of the first application and configuration information for deactivation of a zoom control function of the first application in the second application. In response to the external electronic device being positioned on the rear surface of the electronic device and not being positioned within the specified distance, the configuration information of the second application may include configuration information for activation of the preview display of the first application and configuration information for activation of the zoom control function of the first application in the second application. In response to the external electronic device being positioned on a front surface of the electronic device and being positioned within the specified distance, the configuration information of the second application may include configuration information for deactivation of the preview display of the first application, configuration information for deactivation of the zoom control function of the first application in the second application, and configuration information for changing of the size of an image capture button to a second size in the second application. In response to the external electronic device being positioned on the front surface of the electronic device and not being positioned within the specified distance, the configuration information of the second application may include configuration information for activation of the preview display of the first application and configuration information for activation of the zoom control function of the first application in the second application.

The electronic device according to an embodiment may include a microphone.

In the electronic device according to an embodiment, the instructions may cause the electronic device to identify a position of the external electronic device by using the communication unit while the video shoot function is executed in the first application, and determine, based on whether the external electronic device is positioned within a specified distance, configuration information of a recording function and the configuration information of the second application. In the electronic device according to an embodiment, the recording function may include a first recording function of recording a voice from a video by using the microphone of the electronic device and a second recording function of recording the voice from the video by using both the microphone of the electronic device and a microphone of the external electronic device.

In the electronic device according to an embodiment, in response to the external electronic device being positioned on a rear surface of the electronic device and being positioned within a specified distance, the configuration information of the second application may include configuration information for activation of a preview display of the first application, configuration information for deactivation of a zoom control function of the first application in the second application, configuration information for deactivation of a microphone of a first external electronic device, and/or configuration information for deactivation of a microphone configuration icon of the first external electronic device. In response to the external electronic device being positioned on the rear surface of the electronic device and not being positioned within the specified distance, the configuration information of the second application may include configuration information for activation of the preview display of the first application, configuration information for activation of the zoom control function of the first application in the second application, configuration information for activation of the microphone of the first external electronic device, and/or configuration information for activation of the microphone configuration icon of the first external electronic device. In response to the external electronic device being positioned on a front surface of the electronic device and being positioned within the specified distance, the configuration information of the second application may include configuration information for deactivation of the preview display of the first application, configuration information for deactivation of the zoom control function of the first application in the second application, configuration information for changing of a size of an image capture button to a second size in the second application, configuration information for deactivation of the microphone of the first external electronic device, and/or configuration information for deactivation of the microphone configuration icon of the first external electronic device. In response to the external electronic device being positioned on the front surface of the electronic device and not being positioned within the specified distance, the configuration information of the second application may include configuration information for activation of a preview of the first application, configuration information for activation of the zoom control function of the first application in the second application, configuration information for activation of the microphone of the first external electronic device, and/or configuration information for activation of the microphone configuration icon of the first external electronic device.

In the electronic device according to an embodiment, the configuration information of the second application of the external electronic device may include information of controlling, based on a voice signal received from the external electronic device, the first application.

A system according to an embodiment may include an electronic device and an external electronic device, wherein the electronic device is configured to connect to the external electronic device and detect movement of the electronic device while operating a first application including a photo capture function and a video shoot function, the electronic device is configured to transmit a request signal to the external electronic device by using a communication unit in response to the electronic device not moving for a specified time interval or longer, the external electronic device is configured to transmit a response signal to the request signal to the electronic device, the electronic device is configured to obtain, based on the response signal, a direction of the external electronic device, the electronic device is configured to determine, based on the direction of the external electronic device, configuration information of a second application corresponding to an auxiliary application of the first application, which operates in the external electronic device, the electronic device is configured to transmit the determined configuration information of the second application to the external electronic device, and the external electronic device is configured to configure, based on the configuration information of the second application, the second application. In the system according to an embodiment, the electronic device may be configured to identify, based on the response signal, the direction in which the external electronic device is positioned, in response to the external electronic device being positioned in a front direction of the electronic device, activate a front camera, deactivate a rear camera, and operate the first application by using the front camera, and in response to the external electronic device being positioned in a rear direction of the electronic device, activate the rear camera, deactivate the front camera, and operate the first application by using the rear camera.

In the system according to an embodiment, the electronic device is configured to identify a position of the external electronic device, and the electronic device is configured to determine, based on whether the external electronic device is positioned within a specified distance, configuration information of the second application.

In the system according to an embodiment, the electronic device is configured to identify the position of the external electronic device by using the communication unit while the photo capture function is executed in the first application, wherein in response to the external electronic device being positioned on a rear surface of the electronic device and being positioned within a specified distance, the configuration information of the second application includes configuration information for activation of a preview display of the first application and configuration information for deactivation of a zoom control function of the first application in the second application, in response to the external electronic device being positioned on the rear surface of the electronic device and not being positioned within the specified distance, the configuration information of the second application includes configuration information for activation of the preview display of the first application and configuration information for activation of the zoom control function of the first application in the second application, in response to the external electronic device being positioned on a front surface of the electronic device and being positioned within the specified distance, the configuration information of the second application includes configuration information for deactivation of the preview display of the first application, configuration information for deactivation of the zoom control function of the first application in the second application, and configuration information for changing of the size of an image capture button to a second size in the second application, and in response to the external electronic device being positioned on the front surface of the electronic device and not being positioned within the specified distance, the configuration information of the second application includes configuration information for activation of the preview display of the first application and configuration information for activation of the zoom control function of the first application in the second application.

In the system according to an embodiment, the electronic device may be configured to identify a position of the external electronic device by using the communication unit while the video shoot function is executed in the first application, and the electronic device may be configured to determine, based on whether the external electronic device is positioned within a specified distance, configuration information of a recording function and the configuration information of the second application, wherein the recording function includes a first recording function of recording a voice from a video by using a microphone of the electronic device and a second recording function of recording the voice from the video by using both the microphone of the electronic device and a microphone of the external electronic device.

In the system according to an embodiment, in response to the external electronic device being positioned on a rear surface of the electronic device and being positioned within a specified distance, the configuration information of the second application may include configuration information for activation of a preview display of the first application, configuration information for deactivation of a zoom control function of the first application in the second application, configuration information for deactivation of a microphone of a first external electronic device, and/or configuration information for deactivation of a microphone configuration icon of the first external electronic device. In response to the external electronic device being positioned on the rear surface of the electronic device and not being positioned within the specified distance, the configuration information of the second application may include configuration information for activation of the preview display of the first application, configuration information for activation of the zoom control function of the first application in the second application, configuration information for activation of the microphone of the first external electronic device, and/or configuration information for activation of the microphone configuration icon of the first external electronic device. In response to the external electronic device being positioned on a front surface of the electronic device and being positioned within the specified distance, the configuration information of the second application may include configuration information for deactivation of the preview display of the first application, configuration information for deactivation of the zoom control function of the first application in the second application, configuration information for changing of a size of an image capture button to a second size in the second application, configuration information for deactivation of the microphone of the first external electronic device, and/or configuration information for deactivation of the microphone configuration icon of the first external electronic device. In response to the external electronic device being positioned on the front surface of the electronic device and not being positioned within the specified distance, the configuration information of the second application may include configuration information for activation of a preview of the first application, configuration information for activation of the zoom control function of the first application in the second application, configuration information for activation of the microphone of the first external electronic device, and/or configuration information for activation of the microphone configuration icon of the first external electronic device.

In the system according to an embodiment, the configuration information of the second application of the external electronic device may include information of controlling the first application, based on a voice signal received from the external electronic device.

A method for operating an electronic device according to an embodiment may include connecting an external electronic device and the electronic device, while operating a first application including a photo capture function and a video shoot function, detecting movement of the electronic device by using a sensor unit, in response to the electronic device not moving for a specified time interval or longer, obtaining a direction of the external electronic device by using a communication unit, determining, based on the direction of the external electronic device, configuration information of a second application corresponding to an auxiliary application of the first application, which operates in the external electronic device, and transmitting the determined configuration information of the second application to the external electronic device.

In the method for operating the electronic device according to an embodiment, the detecting of movement of the electronic device by using the sensor unit may be substituted by detecting movement of the electronic device by using the sensor unit, recognizing movement of the electronic device by using the sensor unit, determining movement of the electronic device by using the sensor unit, and/or identifying movement of the electronic device by using the sensor unit, or may include the detecting, the recognizing, the determining, and/or the identifying.

The method for operating the electronic device according to an embodiment may include identifying the direction in which the external electronic device is positioned by using the communication unit, in response to the external electronic device being positioned in a front direction of the electronic device, activating a front camera, deactivating a rear camera, and operating the first application by using the front camera, and in response to the external electronic device being positioned in a rear direction of the electronic device, activating the rear camera, deactivating the front camera, and operating the first application by using the rear camera.

The method for operating the electronic device according to an embodiment may include identifying the position of the external electronic device by using the communication unit, and determining, based on whether the external electronic device is positioned within a specified distance, configuration of the second application.

In the method for operating the electronic device according to an embodiment, the identifying of the position of the external electronic device by using the communication unit may be substituted by detecting the position of the external electronic device by using the communication unit, recognizing the position of the external electronic device by using the communication unit, determining the position of the external electronic device by using the communication unit, and/or sensing the position of the external electronic device by using the communication unit, or may include the detecting, the recognizing, the determining, and the sensing.

The method for operating the electronic device according to an embodiment may further include identifying the position of the external electronic device by using the communication unit while executing a photo capture function in the first application, wherein in response to the external electronic device being positioned on a rear surface of the electronic device and being positioned within a specified distance, the configuration information of the second application includes configuration information for activation of a preview display of the first application and configuration information for deactivation of a zoom control function of the first application in the second application, in response to the external electronic device being positioned on the rear surface of the electronic device and not being positioned within the specified distance, the configuration information of the second application includes configuration information for activation of the preview display of the first application and configuration information for activation of the zoom control function of the first application in the second application, in response to the external electronic device being positioned on a front surface of the electronic device and being positioned within the specified distance, the configuration information of the second application includes configuration information for deactivation of the preview display of the first application, configuration information for deactivation of the zoom control function of the first application in the second application, and configuration information for changing of the size of an image capture button to a second size in the second application, and in response to the external electronic device being positioned on the front surface of the electronic device and not being positioned within the specified distance, the configuration information of the second application includes configuration information for activation of the preview display of the first application and configuration information for activation of the zoom control function of the first application in the second application.

The method for operating the electronic device according to an embodiment may include identifying a position of the external electronic device by using the communication unit while the video shoot function is executed in the first application, and determining, based on whether the external electronic device is positioned within a specified distance, configuration information of a recording function and the configuration information of the second application, wherein the recording function includes a first recording function of recording a voice from a video by using the microphone of the electronic device and a second recording function of recording the voice from the video by using both the microphone of the electronic device and a microphone of the external electronic device.

In the method for operating the electronic device according to an embodiment, in response to the external electronic device being positioned on a rear surface of the electronic device and being positioned within a specified distance, the configuration information of the second application may include configuration information for activation of a preview display of the first application, configuration information for deactivation of a zoom control function of the first application in the second application, configuration information for deactivation of a microphone of a first external electronic device, and/or configuration information for deactivation of a microphone configuration icon of the first external electronic device. In response to the external electronic device being positioned on the rear surface of the electronic device and not being positioned within the specified distance, the configuration information of the second application may include configuration information for activation of the preview display of the first application, configuration information for activation of the zoom control function of the first application in the second application, configuration information for activation of the microphone of the first external electronic device, and/or configuration information for activation of the microphone configuration icon of the first external electronic device. In response to the external electronic device being positioned on a front surface of the electronic device and being positioned within the specified distance, the configuration information of the second application may include configuration information for deactivation of the preview display of the first application, configuration information for deactivation of the zoom control function of the first application in the second application, configuration information for changing of a size of an image capture button to a second size in the second application, configuration information for deactivation of the microphone of the first external electronic device, and/or configuration information for deactivation of the microphone configuration icon of the first external electronic device. In response to the external electronic device being positioned on the front surface of the electronic device and not being positioned within the specified distance, the configuration information of the second application may include configuration information for activation of a preview of the first application, configuration information for activation of the zoom control function of the first application in the second application, configuration information for activation of the microphone of the first external electronic device, and/or configuration information for activation of the microphone configuration icon of the first external electronic device. The electronic device according to various embodiments disclosed herein may be one of various types of electronic devices. The electronic device may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order). If an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a single integrated component, or a minimum unit or part thereof, adapted to perform one or more functions. For example, according to an embodiment, the "module" may be implemented in the form of an application-specific integrated circuit (ASIC).

An embodiment as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions each may include a code generated by a complier or a code executable by an interpreter. The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to embodiments, each element (e.g., a module or a program) of the above-described elements may include a single entity or multiple entities, and some of the multiple entities mat be separately disposed in any other element. According to various embodiments, one or more of the above-described elements or operations may be omitted, or one or more other elements or operations may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

## Claims

1. An electronic device comprising:
a communication unit;
a sensor unit;
a camera unit comprising a front camera and a rear camera;
a processor; and
a memory operatively connected to the processor,
wherein the memory stores instructions which, when executed, cause the electronic device to:
connect an external electronic device and the electronic device;
while operating a first application comprising a photo capture function and a video shoot function related to the camera unit, detect movement of the electronic device by using the sensor unit;
in response to the electronic device not moving for a specified time interval or longer, obtain a direction of the external electronic device by using the communication unit;
determine, based on the direction of the external electronic device, configuration information of a second application corresponding to an auxiliary application of the first application, which operates in the external electronic device; and
transmit the determined configuration information of the second application to the external electronic device.

2. The electronic device of claim 1, wherein the instructions are configured to cause the electronic device to:
identify the direction of the external electronic device by using the communication unit;
in response to the external electronic device being positioned in a front direction of the electronic device, activate the front camera, deactivate the rear camera, and operate the first application by using the front camera; and
in response to the external electronic device being positioned in a rear direction of the electronic device, activate the rear camera, deactivate the front camera, and operate the first application by using the rear camera.

3. The electronic device of one of claims 1 and 2, wherein the instructions are configured to cause the electronic device to:
identify a position of the external electronic device by using the communication unit; and
determine, based on whether the external electronic device is positioned within a specified distance, configuration information of the second application.

4. The electronic device of claim 3, wherein the instructions are configured to cause the electronic device to identify the position of the external electronic device by using the communication unit while the photo capture function is executed in the first application,
wherein in response to the external electronic device being positioned on a rear surface of the electronic device and being positioned within a specified distance, the configuration information of the second application comprises configuration information for activation of a preview display of the first application and configuration information for deactivation of a zoom control function of the first application in the second application,
wherein in response to the external electronic device being positioned on the rear surface of the electronic device and not being positioned within the specified distance, the configuration information of the second application comprises configuration information for activation of the preview display of the first application and configuration information for activation of the zoom control function of the first application in the second application,
wherein in response to the external electronic device being positioned on a front surface of the electronic device and being positioned within the specified distance, the configuration information of the second application comprises configuration information for deactivation of the preview display of the first application, configuration information for deactivation of the zoom control function of the first application in the second application, and configuration information for changing of a size of an image capture button to a second size in the second application, and
wherein in response to the external electronic device being positioned on the front surface of the electronic device and not being positioned within the specified distance, the configuration information of the second application comprises configuration information for activation of the preview display of the first application and configuration information for activation of the zoom control function of the first application in the second application.

5. The electronic device of claim 2, further comprising a microphone,
wherein the instructions are configured to cause the electronic device to:
identify a position of the external electronic device by using the communication unit while the video shoot function is executed in the first application; and
determine, based on whether the external electronic device is positioned within a specified distance, configuration information of a recording function and the configuration information of the second application, and
wherein the recording function comprises a first recording function of recording a voice from a video by using the microphone of the electronic device and a second recording function of recording the voice from the video by using both the microphone of the electronic device and a microphone of the external electronic device.

6. The electronic device of claim 5, wherein in response to the external electronic device being positioned on a rear surface of the electronic device and being positioned within a specified distance, the configuration information of the second application comprises configuration information for activation of a preview display of the first application, configuration information for deactivation of a zoom control function of the first application in the second application, configuration information for deactivation of a microphone of a first external electronic device, and/or configuration information for deactivation of a microphone configuration icon of the first external electronic device,
wherein in response to the external electronic device being positioned on the rear surface of the electronic device and not being positioned within the specified distance, the configuration information of the second application comprises configuration information for activation of the preview display of the first application, configuration information for activation of the zoom control function of the first application in the second application, configuration information for activation of the microphone of the first external electronic device, and/or configuration information for activation of the microphone configuration icon of the first external electronic device,
wherein in response to the external electronic device being positioned on a front surface of the electronic device and being positioned within the specified distance, the configuration information of the second application comprises configuration information for deactivation of the preview display of the first application, configuration information for deactivation of the zoom control function of the first application in the second application, configuration information for changing of a size of an image capture button to a second size in the second application, configuration information for deactivation of the microphone of the first external electronic device, and/or configuration information for deactivation of the microphone configuration icon of the first external electronic device, and
wherein in response to the external electronic device being positioned on the front surface of the electronic device and not being positioned within the specified distance, the configuration information of the second application comprises configuration information for activation of a preview of the first application, configuration information for activation of the zoom control function of the first application in the second application, configuration information for activation of the microphone of the first external electronic device, and/or configuration information for activation of the microphone configuration icon of the first external electronic device.

7. The electronic device of claim 2, wherein the configuration information of the second application of the external electronic device comprises information of controlling, based on a voice signal received from the external electronic device, the first application.

8. A system comprising:
an electronic device; and
an external electronic device,
wherein the electronic device is configured to connect to the external electronic device and detect movement of the electronic device while operating a first application comprising a photo capture function and a video shoot function,
wherein the electronic device is configured to transmit a request signal to the external electronic device by using a communication unit in response to the electronic device not moving for a specified time interval or longer,
wherein the external electronic device is configured to transmit a response signal to the request signal to the electronic device,
wherein the electronic device is configured to obtain, based on the response signal, a direction of the external electronic device,
wherein the electronic device is configured to determine, based on the direction of the external electronic device, configuration information of a second application corresponding to an auxiliary application of the first application, which operates in the external electronic device,
wherein the electronic device is configured to transmit the determined configuration information of the second application to the external electronic device, and
wherein the external electronic device is configured to configure, based on the configuration information of the second application, the second application.

9. The system of claim 8, wherein the electronic device is configured to:
identify, based on the response signal, a direction at which the external electronic device is positioned;
in response to the external electronic device being positioned in a front direction of the electronic device, activate a front camera, deactivate a rear camera, and operate the first application by using the front camera; and
in response to the external electronic device being positioned in a rear direction of the electronic device, activate the rear camera, deactivate the front camera, and operate the first application by using the rear camera.

10. The system of one of claims 8 and 9, wherein the electronic device is configured to identify a position of the external electronic device, and
wherein the electronic device is configured to determine, based on whether the external electronic device is positioned within a specified distance, configuration information of the second application.

11. The system of claim 10, wherein the electronic device is configured to identify the position of the external electronic device by using the communication unit while a photo capture function is executed in the first application,
wherein in response to the external electronic device being positioned on a rear surface of the electronic device and being positioned within a specified distance, the configuration information of the second application comprises configuration information for activation of a preview display of the first application and configuration information for deactivation of a zoom control function of the first application in the second application,
wherein in response to the external electronic device being positioned on the rear surface of the electronic device and not being positioned within the specified distance, the configuration information of the second application comprises configuration information for activation of the preview display of the first application and configuration information for activation of the zoom control function of the first application in the second application,
wherein in response to the external electronic device being positioned on a front surface of the electronic device and being positioned within the specified distance, the configuration information of the second application comprises configuration information for deactivation of the preview display of the first application, configuration information for deactivation of the zoom control function of the first application in the second application, and configuration information for changing of a size of an image capture button to a second size in the second application, and
wherein in response to the external electronic device being positioned on the front surface of the electronic device and not being positioned within the specified distance, the configuration information of the second application comprises configuration information for activation of the preview display of the first application and configuration information for activation of the zoom control function of the first application in the second application.

12. The system of claim 9, wherein the electronic device is configured to identify a position of the external electronic device by using the communication unit while a video shoot function is executed in the first application,
wherein the electronic device is configured to determine, based on whether the external electronic device is positioned within a specified distance, configuration information of a recording function and the configuration information of the second application, and
wherein the recording function comprises a first recording function of recording a voice of a video by using a microphone of the electronic device and a second recording function of recording the voice of the video by using both the microphone of the electronic device and a microphone of the external electronic device.

13. The system of claim 12, wherein in response to the external electronic device being positioned on a rear surface of the electronic device and being positioned within a specified distance, the configuration information of the second application comprises configuration information for activation of a preview display of the first application, configuration information for deactivation of a zoom control function of the first application in the second application, configuration information for deactivation of a microphone of a first external electronic device, and/or configuration information for deactivation of a microphone configuration icon of the first external electronic device,
wherein in response to the external electronic device being positioned on the rear surface of the electronic device and not being positioned within the specified distance, the configuration information of the second application comprises configuration information for activation of the preview display of the first application, configuration information for activation of the zoom control function of the first application in the second application, configuration information for activation of the microphone of the first external electronic device, and/or configuration information for activation of the microphone configuration icon of the first external electronic device,
wherein in response to the external electronic device being positioned on a front surface of the electronic device and being positioned within the specified distance, the configuration information of the second application comprises configuration information for deactivation of the preview display of the first application, configuration information for deactivation of the zoom control function of the first application in the second application, configuration information for changing of a size of an image capture button to a second size in the second application, configuration information for deactivation of the microphone of the first external electronic device, and/or configuration information for deactivation of the microphone configuration icon of the first external electronic device, and
wherein in response to the external electronic device being positioned on the front surface of the electronic device and not being positioned within the specified distance, the configuration information of the second application comprises configuration information for activation of a preview of the first application, configuration information for activation of the zoom control function of the first application in the second application, configuration information for activation of the microphone of the first external electronic device, and/or configuration information for activation of the microphone configuration icon of the first external electronic device.

14. A method for operating an electronic device, the method comprising:
connecting an external electronic device and the electronic device;
while operating a first application comprising a photo capture function and a video shoot function, detecting movement of the electronic device by using a sensor unit;
in response to the electronic device not moving for a specified time interval or longer, obtaining a direction of the external electronic device by using a communication unit;
determining, based on the direction of the external electronic device, configuration information of a second application corresponding to an auxiliary application of the first application, which operates in the external electronic device; and
transmitting the determined configuration information of the second application to the external electronic device.

15. The method of claim 14, comprising:
identifying a direction at which the external electronic device is positioned by using the communication unit;
in response to the external electronic device being positioned in a front direction of the electronic device, activating a front camera, deactivating a rear camera, and operating the first application by using the front camera; and
in response to the external electronic device being positioned in a rear direction of the electronic device, activating the rear camera, deactivating the front camera, and operating the first application by using the rear camera.
